# EUROPEAN PATENT APPLICATION

(11) **EP 4 686 258 A1**
(43) Date of publication of application: **28.01.2026**
(21) Application number: 24784169.5
(22) Date of filing: 28.03.2024
(51) Int. Cl.: H04W 36/00

(54) **CELL HANDOVER METHOD AND APPARATUS**

(30) Priority: 07.04.2023 CN 202310404090
(71) Applicant: Huawei Technologies Co., Ltd., Shenzhen, Guangdong 518129 (CN)
(72) Inventor: GU, Zhifang, Shenzhen, Guangdong 518129 (CN); FAN, Qiang, Shenzhen, Guangdong 518129 (CN)
(74) Representative: Goddar, Heinz J.
(86) International application number: PCT/CN2024/084491
(87) International publication number: WO 2024/208084

(57) **Abstract**

A cell handover method and an apparatus are provided. A first network device receives a first message or a second message from a second network device, where the first network device provides at least one candidate cell for a first terminal device, the second network device provides a source cell for the first terminal device, the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and sends a third message to the second network device based on the first message, or sends a fourth message to the second network device based on the second message, where the third message includes information about the first uplink resource, and the fourth message indicates that the first network device has activated the second uplink resource. In this way, an interruption time of a terminal device is reduced, and uplink resource utilization of a network device is improved.

## Description

### CROSS-REFERENCE TO RELATED APPLICATIONS

This application claims priority to Chinese Patent Application No. 202310404090.X, filed with the China National Intellectual Property Administration on April 7, 2023 and entitled "CELL HANDOVER METHOD AND APPARATUS", which is incorporated herein by reference in its entirety.

### TECHNICAL FIELD

This application relates to the field of communication technologies, and in particular, to a cell handover method and an apparatus.

### BACKGROUND

In a mobile communication system, due to a location change of a terminal device, a communication link between the terminal device and a network device (for example, an access network device) changes. Accordingly, the network device indicates, based on movement of the terminal device, the terminal device to perform a cell handover, so that the terminal device is handed over from a source cell to a target cell. There may be an interruption time for the terminal device in a process of the handover from the source cell to the target cell, affecting user experience.

Currently, in a 5th generation (5th generation, 5G) mobile communication technology system, an L1/L2 layer-triggered mobility (L1/L2 layer-triggered mobility, LTM) handover is considered for use, to trigger a handover through a lower layer, so as to reduce the interruption time of the terminal device. In a process of performing the LTM handover, to avoid interruption caused by random access, the terminal device may access the target cell without the random access. For example, the terminal device may send an uplink message to the target cell by using an uplink grant (uplink grant, UL grant) of the target cell. After the target cell receives the uplink message, it may be considered that the terminal device is successfully handed over to the target cell.

The terminal device may obtain the uplink grant of the target cell in two manners. Manner 1: The uplink grant is dynamically configured. For example, after receiving a cell handover notification sent by a network device to which the source cell belongs, a network device to which the target cell belongs provides the uplink grant of the target cell for the terminal device. However, there is interaction between the network device to which the target cell belongs and the network device to which the source cell belongs, resulting in an increase in the interruption time of the terminal device. Manner 2: The uplink grant is pre-configured. For example, when providing configuration information of the target cell for the terminal device, a network device to which the target cell belongs includes the uplink grant of the target cell in the configuration information of the target cell. However, the pre-configured uplink grant can be used only by one terminal device after being configured for the terminal device, and cannot be flexibly configured for another terminal device, resulting in low uplink grant resource utilization of the network device.

### SUMMARY

Embodiments of this application provide a cell handover method and an apparatus, to reduce an interruption time of a terminal device and improve uplink resource utilization of a network device.

According to a first aspect, a cell handover method is provided. The method may be performed by a first network device or a chip in the first network device. For example, the method is performed by the first network device. The first network device provides at least one candidate cell for a first terminal device. The method includes: The first network device may receive a first message or a second message from a second network device, where the second network device provides a source cell for the first terminal device, the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and the first network device sends a third message to the second network device based on the first message, or sends a fourth message to the second network device based on the second message, where the third message includes information about the first uplink resource, the fourth message includes first indication information, and the first indication information indicates that the first network device has activated the second uplink resource.

In the foregoing solution, the first network device and the second network device can negotiate to determine a configuration time or an activation time of an uplink resource of a cell pre-configured by the first network device for the first terminal device. In this way, the first network device pre-configures the uplink resource of the cell for the first terminal device or activates the uplink resource pre-configured for the first terminal device only when the first network device receives a configuration request (namely, the first message) or an activation request (namely, the second message) of the second network device, to be specific, when the first terminal device needs to access the cell on the uplink resource of the cell. This reduces an interruption time of the terminal device, and improves uplink resource utilization of the network device.

In a possible implementation, before the first network device receives the first message or the second message from the second network device, the first network device may further send resource configuration information of the at least one candidate cell and second indication information to the second network device, where the second indication information indicates that the resource configuration information does not include the first uplink resource, or the second indication information indicates that the resource configuration information includes the second uplink resource.

In this implementation, the second network device can determine, using the second indication information, whether the first network device has pre-configured the uplink resource of the cell for the first terminal device, and appropriately send the configuration request or the activation request to the first network device. If the uplink resource of the cell is not pre-configured for the first terminal device, the second network device sends the configuration request to the first network device. If the uplink resource of the cell is pre-configured for the first terminal device, the second network device sends the activation request to the first network device. This improves communication reliability.

In a possible implementation, the first message is further used to request the first network device to provide synchronization configuration information of the at least one candidate cell. The synchronization configuration information is used by the first network device to synchronize with the first terminal device.

In this implementation, the first network device can provide the synchronization configuration information of the cell for the first terminal device. In this way, the first terminal device can synchronize with the first network device based on the synchronization configuration information of the cell, to meet a prerequisite for handing over the first terminal device to the cell without random access, so as to reduce the interruption time of the terminal device.

In a possible implementation, the information about the first uplink resource includes one or more of the following information: the first uplink resource; third indication information, indicating that the first network device has provided the first uplink resource; and fourth indication information, indicating that the first network device refuses to provide the first uplink resource.

The one or more of the information are provided, so that the second network device can quickly learn of which cell has provided an uplink resource for the first terminal device, and can indicate the first terminal device to access, without the random access, the cell that has provided the uplink resource for the first terminal device. This reduces the interruption time of the terminal device.

In a possible implementation, the third message further includes the synchronization configuration information. The synchronization configuration information is used by the first network device to synchronize with the first terminal device. The synchronization configuration information includes a random access time-frequency resource. The random access time-frequency resource indicates a first time domain position and/or a first frequency domain position at which the first network device synchronizes with the first terminal device. The first time domain position and/or the first frequency domain position are/is used by the second network device to stop scheduling data transmission for the first terminal device.

The one or more of the information are provided, so that the second network device can quickly learn of a time domain position and/or a frequency domain position at which the first network device synchronizes with the first terminal device, and can stop scheduling, at the time domain position and/or the frequency domain position, the data transmission for the first terminal device. This avoids impact of the synchronization between the first terminal device and the first network device on communication between the first terminal device and the second network device, and reduces a possibility of a packet loss in the source cell, thereby improving communication reliability.

In a possible implementation, the second message includes one or more of the following information: identification information of the at least one candidate cell; and fifth indication information, indicating the first network device to activate the second uplink resource at a second time domain position.

The one or more of the information are provided, so that the first network device can quickly learn of a time domain position at which the uplink resource of the cell configured for the first terminal device is activated, thereby improving communication reliability.

In a possible implementation, when there are one or more second uplink resources, the fourth message may further include one or more of the following information: sixth indication information, indicating that the first network device has activated one second uplink resource; and seventh indication information, indicating that the first network device has activated any one of a plurality of second uplink resources.

The one or more of the information are provided, so that the second network device can quickly learn of an uplink resource of the cell activated by the first network device and configured for the first terminal device, and can indicate the first terminal device to access, without random access, a cell that provides an activated uplink resource for the first terminal device. This reduces the interruption time of the terminal device.

According to a second aspect, a cell handover method is provided. The method may be performed by a first network device or a chip in the first network device. For example, the method is performed by the first network device. The first network device provides at least one candidate cell for a first terminal device. The method includes: The first network device may synchronize with the first terminal device; the first network device may send a fifth message to a second network device after the synchronization is completed; and the second network device provides a source cell for the first terminal device, where the fifth message includes a first uplink resource of the at least one candidate cell, and the first uplink resource is used by the first terminal device to access the at least one candidate cell.

In the foregoing solution, the first network device and the first terminal device can negotiate to determine a configuration time of an uplink resource of a cell pre-configured by the first network device for the first terminal device. In this way, the first network device pre-configures the uplink resource of the cell for the first terminal device only when the first network device determines that the first network device has completed the synchronization with the first terminal device, to be specific, when the first terminal device needs to access the cell on the uplink resource of the cell. This reduces an interruption time of the terminal device, and improves uplink resource utilization of the network device.

In a possible implementation, the first network device may send the fifth message to the second network device when the first network device does not receive a sixth message from the first terminal device at a third time domain position. A difference between the third time domain position and a fourth time domain position is greater than a first threshold. The fourth time domain position is a time domain position at which the first network device sends a seventh message to the first terminal device. The sixth message is a retransmitted message of a first message MSG1 in a random access process. The seventh message is a second message MSG2 in the random access process. Alternatively, the first network device sends the fifth message to the second network device when the first network device receives an eighth message from the first terminal device. The eighth message is a third message MSG3 in the random access process.

In this implementation, the first network device can determine, based on whether the retransmitted message of MSG1 is not received within a specific time after MSG2 is sent, or whether MSG3 is received, whether the synchronization with the first terminal device is completed, to be specific, determine whether to pre-configure the uplink resource of the cell for the first terminal device. This reduces the interruption time of the terminal device and improves the uplink resource utilization of the network device.

In a possible implementation, the eighth message includes a cause value. The cause value indicates the first terminal device to access the at least one candidate cell in the random access process, or the cause value indicates the first terminal device to complete the synchronization with the first network device in the random access process.

The foregoing information is provided, so that the first network device can quickly learn whether a cause of a current random access is for the synchronization or a cell handover, and then determine whether to pre-configure the uplink resource of the cell for the first terminal device. This reduces the interruption time of the terminal device and improves the uplink resource utilization of the network device.

In a possible implementation, before the first network device sends the fifth message to the second network device, the first network device may further send resource configuration information of the at least one candidate cell to the second network device. The resource configuration information includes synchronization configuration information of the at least one candidate cell. The synchronization configuration information is used by the first network device to synchronize with the first terminal device. The synchronization configuration information includes search space configuration information and/or physical uplink shared channel configuration information. The search space configuration information is used by the first terminal device to receive MSG2. The physical uplink shared channel configuration information is used by the first terminal device to send MSG3.

In this implementation, the first terminal device can complete the synchronization with the first network device by using the search space configuration information and the physical uplink shared channel configuration information, and then the first network device pre-configures the uplink resource of the cell for the first terminal device only when determining that the first network device has completed the synchronization with the first terminal device. This reduces the interruption time of the terminal device and improves the uplink resource utilization of the network device.

In a possible implementation, the fifth message may further include one or more of the following information: identification information of the at least one candidate cell; eighth indication information, indicating that the first network device has completed the synchronization with the first terminal device; and ninth indication information, indicating that the first network device has provided the first uplink resource.

The one or more of the information are provided, so that the second network device can quickly learn that the first network device has completed the synchronization with the first terminal device and/or has pre-configured the uplink resource of the cell for the first terminal device, and can indicate the first terminal device to access, without random access, a cell that has provided an uplink resource for the first terminal device. This reduces the interruption time of the terminal device.

According to a third aspect, a cell handover method is provided. The method may be performed by a first network device or a chip in the first network device. For example, the method is performed by the first network device. The first network device provides at least one candidate cell for a first terminal device. The method includes: The first network device receives a ninth message from a second network device, where the ninth message includes tenth indication information, the tenth indication information indicates the first network device to send a first uplink resource of a target cell to the first terminal device at a fifth time domain position or a time domain position after the fifth time domain position, the target cell is any candidate cell in the at least one candidate cell, and the first uplink resource is used by the first terminal device to access the target cell; and the first network device may send the first uplink resource to the first terminal device at the fifth time domain position or the time domain position after the fifth time domain position.

In the foregoing solution, the first network device and the second network device can negotiate to determine a configuration time of an uplink resource of a cell dynamically configured by the first network device for the first terminal device. In this way, the first network device dynamically configures the uplink resource of the cell for the first terminal device only at the time domain position indicated by the second network device, to be specific, when the first network device needs to access the cell on the uplink resource of the cell. This reduces an interruption time of the terminal device, and improves uplink resource utilization of the network device.

In a possible implementation, the ninth message may further include one or more of the following information: identification information of the target cell; and eleventh indication information, indicating the first network device to send the first uplink resource to the first terminal device in a first beam direction, or indicating the first network device to receive an uplink message from the first terminal device in a second beam direction.

The one or more of the information are provided, so that the first network device can quickly learn a beam direction in which the uplink resource of the cell is sent or a beam direction in which the uplink message is received. This improves communication reliability.

According to a fourth aspect, a cell handover method is provided. The method may be performed by a first network device or a chip in the first network device. For example, the method is performed by the first network device. The first network device provides at least one candidate cell for a first terminal device. The method includes:
the first network device may receive a first message from a second network device; the second network device provides a source cell for the first terminal device, where the first message is used to request the first network device to provide synchronization configuration information of the at least one candidate cell, and the synchronization configuration information is used by the first network device to synchronize with the first terminal device; and the first network device may send a third message to the second network device based on the first message, where the third message includes the synchronization configuration information.

In the foregoing solution, the first network device can provide the synchronization configuration information for the second network device, so that the second network device can learn, by using the synchronization configuration information, a time domain position and/or a frequency domain position at which the first network device synchronizes with the first terminal device, and can stop scheduling, at the time domain position and/or the frequency domain position, data transmission for the first terminal device. This avoids impact of the synchronization between the first terminal device and the first network device on communication between the first terminal device and the second network device, and reduces a possibility of a packet loss in the source cell, thereby improving communication reliability.

In a possible implementation, the synchronization configuration information includes a random access time-frequency resource. The random access time-frequency resource indicates a first time domain position and/or a first frequency domain position at which the first network device synchronizes with the first terminal device. The first time domain position and/or the first frequency domain position are/is used by the second network device to stop scheduling the data transmission for the first terminal device.

The foregoing information is provided, so that the second network device can quickly learn of the time domain position and/or the frequency domain position at which the first network device synchronizes with the first terminal device, and can stop scheduling, at the time domain position and/or the frequency domain position, the data transmission for the first terminal device. This avoids the impact of the synchronization between the first terminal device and the first network device on the communication between the first terminal device and the second network device, and reduces the possibility of the packet loss in the source cell, thereby improving communication reliability.

According to a fifth aspect, a cell handover method is provided. The method may be performed by a second network device or a chip in the second network device. For example, the method is performed by the second network device. The second network device is a network device to which a source cell of a first terminal device belongs. The method includes: The second network device may receive a first measurement result from the first terminal device, where the first measurement result includes measurement results corresponding to the source cell and at least one candidate cell of the first terminal device; the second network device may send a first message or a second message to a first network device, where the first network device provides the at least one candidate cell for the first terminal device, the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and the second network device may receive a third message from the first network device based on the first message and send a tenth message to the first terminal device, or receive a fourth message from the first network device based on the second message, where the third message includes information about the first uplink resource, the tenth message includes the first uplink resource, the fourth message includes first indication information, and the first indication information indicates that the first network device has activated the second uplink resource.

In a possible implementation, the second network device may further receive, before receiving the first measurement result from the first terminal device, resource configuration information of the at least one candidate cell and second indication information from the first network device, where the second indication information indicates that the resource configuration information does not include the first uplink resource, or the second indication information indicates that the resource configuration information includes the second uplink resource; and send, after receiving the first measurement result from the first terminal device, an eleventh message to the first terminal device. The eleventh message includes eleventh indication information, the eleventh indication information indicates the first terminal device to access a target cell, and the target cell is any candidate cell in the at least one candidate cell.

In a possible implementation, the eleventh message further includes one or more of the following information: identification information of the target cell; twelfth indication information, indicating the first terminal device to access the target cell without random access; thirteenth indication information, indicating the first terminal device to send an uplink message to the first network device on the first uplink resource or the second uplink resource of the target cell; and fourteenth indication information, indicating that the second uplink resource of the target cell has been activated.

In a possible implementation, if the second indication information indicates that the resource configuration information does not include the first uplink resource, the second network device may send the first message to the first network device before sending the eleventh message; or if the second indication information indicates that the resource configuration information includes the second uplink resource, the second network device may send the second message to the first network device before sending the eleventh message, after sending the eleventh message, or when sending the eleventh message.

In a possible implementation, the first message is further used to request the first network device to provide synchronization configuration information of the at least one candidate cell. The synchronization configuration information is used by the first network device to synchronize with the first terminal device.

In a possible implementation, the third message further includes the synchronization configuration information. The synchronization configuration information is used by the first network device to synchronize with the first terminal device. When the third message does not include the first uplink resource, the third message includes one or more of the following information: third indication information, indicating that the first network device has provided the first uplink resource; and fourth indication information, indicating that the first network device refuses to provide the first uplink resource.

In a possible implementation, the synchronization configuration information includes a random access time-frequency resource. After the second network device receives the third message from the first network device based on the first message, the second network device may determine, based on the random access time-frequency resource, a first time domain position and/or a first frequency domain position at which the first network device synchronizes with the first terminal device; and the second network device may stop, at the first time domain position and/or the first frequency domain position, scheduling data transmission for the first terminal device.

In a possible implementation, the second message includes one or more of the following information: identification information of the at least one candidate cell; and fifth indication information, indicating the first network device to activate the second uplink resource at a second time domain position.

In a possible implementation, when there are one or more second uplink resources, the fourth message may further include one or more of the following information: sixth indication information, indicating that the first network device has activated one second uplink resource; and seventh indication information, indicating that the first network device has activated any one of a plurality of second uplink resources.

For beneficial effect of the implementations of the fifth aspect, refer to descriptions of beneficial effect of corresponding implementations of the first aspect. Details are not described again.

According to a sixth aspect, a cell handover method is provided. The method may be performed by a second network device or a chip in the second network device. For example, the method is performed by the second network device. The second network device is a network device to which a source cell of a first terminal device belongs. The method includes: The second network device may receive a first measurement result from the first terminal device, where the first measurement result includes measurement results corresponding to the source cell and at least one candidate cell of the first terminal device; the second network device may receive a fifth message from a first network device, where the first network device provides the at least one candidate cell for the first terminal device, the first network device has completed synchronization with the first terminal device, the fifth message includes a first uplink resource of the at least one candidate cell, and the first uplink resource is used by the first terminal device to access the at least one candidate cell; and the second network device may send a twelfth message to the first terminal device, where the twelfth message includes the first uplink resource.

In a possible implementation, before the second network device receives the fifth message from the first network device, the second network device may further receive resource configuration information of the at least one candidate cell from the first network device, where the resource configuration information includes synchronization configuration information of the at least one candidate cell, the synchronization configuration information is used by the first network device to synchronize with the first terminal device, the synchronization configuration information includes search space configuration information and/or physical uplink shared channel configuration information, the search space configuration information is used by the first terminal device to receive a second message MSG2 in a random access process, and the physical uplink shared channel configuration information is used by the first terminal device to send a third message MSG3 in the random access process; and the second network device may further send a fourteenth message to the first terminal device, where the fourteenth message includes the resource configuration information.

In a possible implementation, the fifth message may further include one or more of the following information: identification information of the at least one candidate cell; eighth indication information, indicating that the first network device has completed the synchronization with the first terminal device; and ninth indication information, indicating that the first network device has provided the first uplink resource.

For beneficial effect of the implementations of the sixth aspect, refer to descriptions of beneficial effect of corresponding implementations of the second aspect. Details are not described again.

According to a seventh aspect, a cell handover method is provided. The method may be performed by a second network device or a chip in the second network device. For example, the method is performed by the second network device. The second network device is a network device to which a source cell of a first terminal device belongs. The method includes:
the second network device may receive a first measurement result from the first terminal device, where the first measurement result includes measurement results corresponding to the source cell and at least one candidate cell of the first terminal device; and
the second network device may send a ninth message to a first network device, where the first network device provides the at least one candidate cell for the first terminal device, the ninth message includes tenth indication information, the tenth indication information indicates the first network device to send a first uplink resource of a target cell to the first terminal device at a fifth time domain position or a time domain position after the fifth time domain position, the target cell is any one candidate cell in the at least one candidate cell, and the first uplink resource is used by the first terminal device to access the target cell.

In a possible implementation, the ninth message may further include one or more of the following information: identification information of the target cell; and eleventh indication information, indicating the first network device to send the first uplink resource to the first terminal device in a first beam direction, or indicating the first network device to receive an uplink message from the first terminal device in a second beam direction.

In a possible implementation, the second network device may further send a thirteenth message to the first terminal device. The thirteenth message indicates the first terminal device to access the target cell at the fifth time domain position or the time domain position after the fifth time domain position.

For beneficial effect of the implementations of the seventh aspect, refer to descriptions of beneficial effect of corresponding implementations of the third aspect. Details are not described again.

According to an eighth aspect, a cell handover method is provided. The method may be performed by a second network device or a chip in the second network device. For example, the method is performed by the second network device. The second network device is a network device to which a source cell of a first terminal device belongs. The method includes:
the second network device may receive a first measurement result from the first terminal device, where the first measurement result includes measurement results corresponding to the source cell and at least one candidate cell of the first terminal device; the second network device may send a first message to the first network device; the first network device provides the at least one candidate cell for the first terminal device, where the first message is used to request the first network device to provide synchronization configuration information of the at least one candidate cell, and the synchronization configuration information is used by the first network device to synchronize with the first terminal device; and the second network device may receive a third message from the first network device based on the first message, and send a tenth message to the first terminal device, where the third message includes the synchronization configuration information, and the tenth message includes the synchronization configuration information.

In a possible implementation, the synchronization configuration information includes a random access time-frequency resource. After the second network device receives the third message from the first network device based on the first message, the second network device may determine, based on the random access time-frequency resource, a first time domain position and/or a first frequency domain position at which the first network device synchronizes with the first terminal device; and the second network device may stop, at the first time domain position and/or the first frequency domain position, scheduling data transmission for the first terminal device.

For beneficial effect of the implementations of the eighth aspect, refer to descriptions of beneficial effect of corresponding implementations of the fourth aspect. Details are not described again.

According to a ninth aspect, a communication apparatus is provided. The apparatus includes a module/unit/technical means for performing the method according to any one of the first aspect and the possible implementations of the first aspect, or the second aspect and the possible implementations of the second aspect, or the third aspect and the possible implementations of the third aspect, or the fourth aspect and the possible implementations of the fourth aspect, or the fifth aspect and the possible implementations of the fifth aspect, or the sixth aspect and the possible implementations of the sixth aspect, or the seventh aspect and the possible implementations of the seventh aspect, or the eighth aspect and the possible implementations of the eighth aspect.

According to a tenth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, through a logic circuit or code instruction execution, the method according to any one of the first aspect and the possible implementations of the first aspect, or the second aspect and the possible implementations of the second aspect, or the third aspect and the possible implementations of the third aspect, or the fourth aspect and the possible implementations of the fourth aspect, or the fifth aspect and the possible implementations of the fifth aspect, or the sixth aspect and the possible implementations of the sixth aspect, or the seventh aspect and the possible implementations of the seventh aspect, or the eighth aspect and the possible implementations of the eighth aspect.

Optionally, the communication apparatus further includes a memory.

According to an eleventh aspect, a computer-readable storage medium is provided, including a program or instructions. When the program or the instructions are run on a computer, the method according to any one of the first aspect and the possible implementations of the first aspect, or the second aspect and the possible implementations of the second aspect, or the third aspect and the possible implementations of the third aspect, or the fourth aspect and the possible implementations of the fourth aspect, or the fifth aspect and the possible implementations of the fifth aspect, or the sixth aspect and the possible implementations of the sixth aspect, or the seventh aspect and the possible implementations of the seventh aspect, or the eighth aspect and the possible implementations of the eighth aspect is performed.

According to a twelfth aspect, a computer program product is provided, including instructions. When the computer program product runs on a computer, the method according to any one of the first aspect and the possible implementations of the first aspect, or the second aspect and the possible implementations of the second aspect, or the third aspect and the possible implementations of the third aspect, or the fourth aspect and the possible implementations of the fourth aspect, or the fifth aspect and the possible implementations of the fifth aspect, or the sixth aspect and the possible implementations of the sixth aspect, or the seventh aspect and the possible implementations of the seventh aspect, or the eighth aspect and the possible implementations of the eighth aspect is performed.

According to a thirteenth aspect, a communication system is provided, including the apparatus according to any one of the ninth aspect and the possible implementations of the ninth aspect.

### BRIEF DESCRIPTION OF DRAWINGS

FIG. 1 is a diagram of an architecture of a communication system according to an embodiment of this application;
FIG. 2 is a diagram of a CU-DU split architecture used by a network device according to an embodiment of this application;
FIG. 3 is an existing schematic flowchart of an LTM handover;
FIG. 4 is an existing schematic flowchart of dynamically configuring an uplink grant;
FIG. 5 is an existing schematic flowchart of pre-configuring an uplink grant;
FIG. 6 is a schematic flowchart of a cell handover method according to an embodiment of this application;
FIG. 7 is a schematic flowchart of obtaining resource configuration information of a cell according to an embodiment of this application;
FIG. 8 is another schematic flowchart of obtaining resource configuration information of a cell according to an embodiment of this application;
FIG. 9 is a schematic flowchart of performing a cell handover according to an embodiment of this application;
FIG. 10 is a schematic flowchart of another cell handover method according to an embodiment of this application;
FIG. 11 is another schematic flowchart of obtaining resource configuration information of a cell according to an embodiment of this application;
FIG. 12 is another schematic flowchart of obtaining resource configuration information of a cell according to an embodiment of this application;
FIG. 13 is another schematic flowchart of performing a cell handover according to an embodiment of this application;
FIG. 14 is a schematic flowchart of another cell handover method according to an embodiment of this application;
FIG. 15 is another schematic flowchart of obtaining resource configuration information of a cell according to an embodiment of this application;
FIG. 16 is another schematic flowchart of obtaining resource configuration information of a cell according to an embodiment of this application;
FIG. 17 is a schematic flowchart of a random access process according to an embodiment of this application;
FIG. 18 is another schematic flowchart of performing a cell handover according to an embodiment of this application;
FIG. 19 is a schematic flowchart of another cell handover method according to an embodiment of this application;
FIG. 20 is a schematic flowchart of another cell handover method according to an embodiment of this application;
FIG. 21 is a diagram of a structure of a communication apparatus according to an embodiment of this application; and
FIG. 22 is a diagram of a structure of another communication apparatus according to an embodiment of this application.

### DESCRIPTION OF EMBODIMENTS

To make objectives, technical solutions, and advantages in embodiments of this application clearer, the following further describes embodiments of this application in detail with reference to accompanying drawings.

The technical solutions in embodiments of this application may be applied to various communication systems, for example, a universal mobile telecommunications system (Universal Mobile Telecommunications System, UMTS), a code division multiple access (Code Division Multiple Access, CDMA) system, a wireless local area network (Wireless Local Area Network, WLAN), a sidelink (Sidelink) communication system, a 4th generation (4th generation, 4G) communication system, a 5th generation (the fifth generation, 5G) wireless communication system, a 6th generation (6th generation, 6G) communication system, or another future evolved system, or other various wireless communication systems that use a radio access technology. The technical solutions in embodiments of this application may be used provided that there is a cell handover requirement in the communication system.

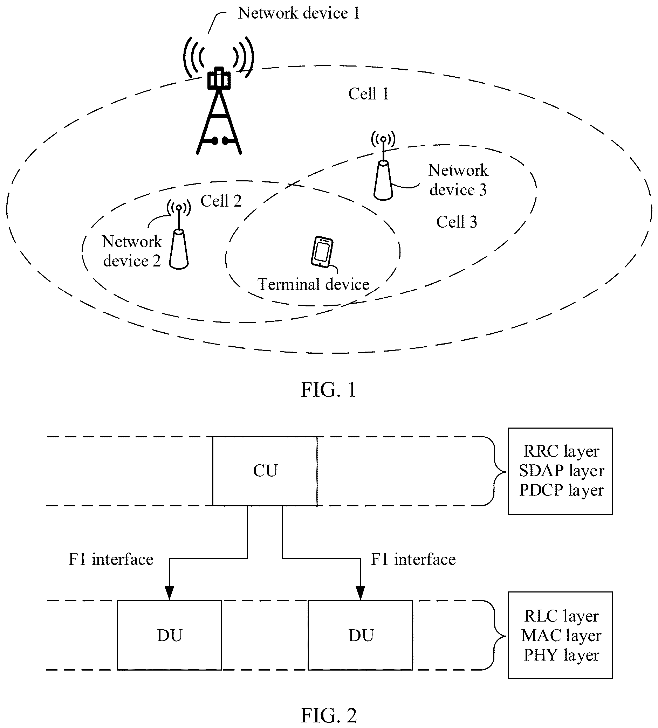

FIG. 1 is a diagram of an architecture of a communication system according to an embodiment of this application. As shown in FIG. 1, the communication system includes a network device and a terminal device.

The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit that completes a part of functions of the base station, for example, may be a central unit (central unit, CU) or a distributed unit (distributed unit, DU). The CU herein completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a part or all of functions of a physical (physical, PHY) layer. For specific descriptions of the foregoing protocol layers, refer to related technical specifications of the 3rd generation partnership project (3rd generation partnership project, 3GPP). The network device may be a macro base station, or may be a micro base station or an indoor base station, or may be a relay node, a donor node, or the like. A specific technology and a specific device form that are used for the network device are not limited in embodiments of this application.

In this embodiment of this application, the network device may use a CU-DU split architecture. The CU-DU split architecture may also be referred to as a distributed deployment architecture. For example, FIG. 2 is a diagram of a CU-DU split architecture used by the network device according to an embodiment of this application. As shown in FIG. 2, the network device may logically include one CU and one or more DUs. Each DU may be connected to the CU through an F1 interface. Information exchange between different DUs may be implemented based on forwarding performed by the CU. The CU and the DU may be physically disposed together, or may be physically disposed separately. This is not limited. The CU may support functions of RRC, PDCP, and SDAP. The DU may support functions of an RLC protocol, a MAC protocol, and a PHY layer protocol.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, autonomous driving, telemedicine, a smart grid, smart furniture, a smart office, a smart wearable, intelligent transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used for the terminal device are not limited in embodiments of this application.

In this embodiment of this application, the network device and the terminal device may be immovable or movable. The network device and the terminal device may be deployed on land, including indoor deployment, outdoor deployment, handheld deployment, or vehicle-mounted deployment, or may be deployed one a water surface, or may be deployed on an airplane, a balloon, or an artificial satellite in the air. Application scenarios of the network device and the terminal device are not limited in embodiments of this application.

Roles of the network device and the terminal device may be relative. For example, an uncrewed aerial vehicle may be configured as a mobile network device. For a terminal device that accesses a network via the uncrewed aerial vehicle, the uncrewed aerial vehicle is a network device. However, for a network device accessed by the uncrewed aerial vehicle, the unmanned aerial vehicle is a terminal device.

A function of the network device may alternatively be performed by a module (for example, a chip) in the network device, or may be performed by a control subsystem including the function of the network device. The control subsystem including the function of the network device may be a control center in the foregoing application scenarios such as the smart grid, the industrial control, the intelligent transportation, and the smart city. A function of the terminal device may alternatively be performed by a module (for example, a chip or a modem) in the terminal device, or may be performed by an apparatus including the function of the terminal device.

In this embodiment of this application, that the terminal device communicates with the network device means that the terminal device sends an uplink signal or uplink information to the network device, where the uplink information is carried on an uplink channel, and/or the network device sends a downlink signal or downlink information to the terminal device, where the downlink information is carried on a downlink channel. To communicate with the network device, the terminal device needs to establish a wireless connection to a cell controlled by the network device (that is, the terminal device camps on the cell controlled by the network device). The cell that establishes the wireless connection to the terminal device is referred to as a serving cell of the terminal device (namely, a cell that serves the terminal device).

The terminal device may be in a coverage area of one or more cells (carriers), and one or more cells may serve the terminal device. For example, in the scenario shown in FIG. 1, the terminal device is in all of a coverage area of a cell 1 controlled by a network device 1, a coverage area of a cell 2 controlled by a network device 2, and a coverage area of a cell 3 controlled by a network device 3. The cell 1, the cell 2, and the cell 3 may all serve the terminal device. It should be noted that, in FIG. 1, an example in which one network device controls only one cell is used. During actual application, one network device may control a plurality of cells at the same time. When there are a plurality of cells serving the terminal device, the terminal device may operate in a carrier aggregation (Carrier Aggregation, CA), dual connectivity (Dual Connectivity, DC), or coordinated multipoint transmission/reception (coordinated multiple points, CoMP) transmission/reception manner, and one or more cells may provide, for the terminal device for operation, one or more of radio resources corresponding to more than one transmission parameter set, and the like.

Due to mobility of the terminal device and/or a change of a cell channel condition, the terminal device may be handed over to a serving cell. A serving cell on which the terminal device originally camps (or a cell from which the terminal device is wirelessly disconnected or a cell from which the terminal device is handed over) is referred to as a source cell, and a cell on which the terminal device newly camps (or a cell to which the terminal device newly establishes a wireless connection or a cell to which the terminal device is handed over) is referred to as a target cell. That is, that the terminal device is handed over to the serving cell means that the terminal device is handed over from the source cell to the target cell. The terminal device may camp on only one cell or camp on a plurality of cells at the same time. The plurality of cells may be controlled by a same network device, or may be controlled by different network devices. This is not limited in embodiments of this application. Correspondingly, when being handed over to the serving cell, the terminal device may be handed over only to one serving cell, or may be handed over to a plurality of serving cells at the same time. This is not limited in embodiments of this application.

In addition, that the cell communicates with the terminal device (for example, the cell sends a downlink signal to the terminal device, and/or the cell receives an uplink signal from the terminal device) means that a network device to which the cell belongs (for example, a base station that controls the cell) communicates with the terminal device. That the cells communicate with each other, for example, one cell communicates with another cell means, if the two cells respectively belong to different network devices (for example, two cells respectively controlled by different base stations), that a network device to which the one cell belongs communicates with a network device to which the another cell belongs (for example, the two network devices transmit messages to each other), or means, if the two cells belong to a same network device (for example, two cells controlled by a same base station), that a functional module that controls the one cell in the network device exchanges, in the network device, signaling or data with a functional module that controls the another cell.

In embodiments of this application, the terms "system" and "network" may be used interchangeably. "A plurality of" means two or more. In view of this, "a plurality of" may also be understood as "at least two" in embodiments of this application. "At least one" may be understood as one or more, for example, understood as one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions of "at least one type" and the like are also similar. The term "and/or" describes an association relationship between associated objects and indicates that three relationships may exist. For example, A and/or B may indicate the following three cases: Only A exists, both A and B exist, and only B exists. In addition, unless otherwise specified, the character "/" generally indicates an "or" relationship between associated objects.

Unless otherwise specified, ordinal numbers such as "first" and "second" mentioned in embodiments of this application are used to distinguish between a plurality of objects, and are not used to limit a sequence, a time sequence, priorities, or importance of the plurality of objects. In addition, descriptions of "first" and "second" do not imply that objects are necessarily different.

The foregoing describes the system architecture and the possible application scenario to which embodiments of this application are applicable. To better understand the technical solutions in embodiments of this application, the following describes related technical features in embodiments of this application.

In an L1 and/or L2 layer-triggered mobility (L1 and/or L2 layer-triggered mobility, LTM) handover in a CU-DU split architecture, L1 is a PHY layer, L2 is a MAC layer, an RLC layer, a PDCP layer, or an SDAP layer, and LTM means that a handover-related operation is mainly performed at L1 and/or L2. For example, a terminal device sends an L1 measurement result to a base station through PHY layer control signaling (carried on a physical uplink control channel (physical uplink control channel, PUCCH)). A PHY layer of the base station reads the L1 measurement result. The base station makes a handover decision based on the L1 measurement result, and sends the handover decision to the terminal device through L1 signaling and/or L2 signaling. The L1 signaling and/or the L2 signaling may be a message carried on a physical downlink control channel (physical downlink control channel, PDCCH), or may be a MAC control element (MAC control element, MAC CE).

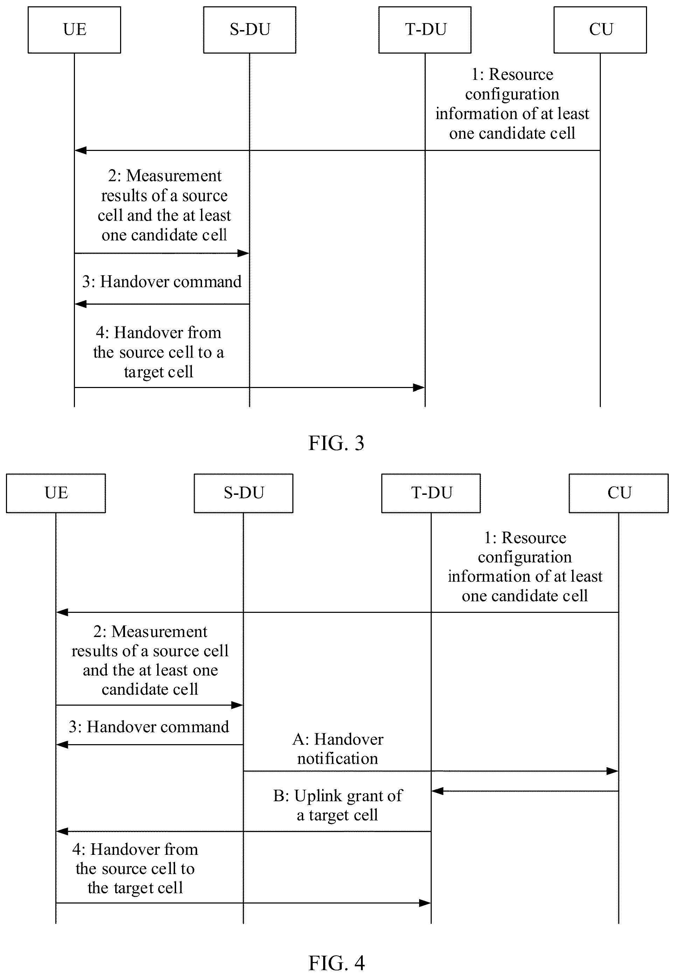

FIG. 3 is an existing schematic flowchart of an LTM handover. As shown in FIG. 3, a source DU (source DU, S-DU) is a DU to which a source cell of UE belongs, that is, the source DU provides the source cell for the UE. A target DU (target DU, T-DU) is a DU to which a target cell of the UE belongs, that is, the target DU provides the target cell for the UE. Specific steps of performing a cell handover between different DUs under a same CU are as follows.

Step 1: The CU sends resource configuration information of at least one candidate cell to the UE via the source DU.

Step 2: The UE sends measurement results of the source cell and the candidate cell to the source DU. In the LTM handover, the UE sends L1 measurement results of the source cell and the at least one candidate cell to the source DU, and the UE sends the L1 measurement results to the source DU on a communication resource of the source cell. The L1 measurement result includes at least one of the following: the L1 measurement result of the source cell and the L1 measurement result of the at least one candidate cell. The L1 measurement result of the source cell and/or the L1 measurement result of the at least one candidate cell may be a cell-level measurement result, or may be a beam-level measurement result.

Step 3: The source DU sends a handover command to the UE, and sends identification information of the target cell to the UE through L1 signaling and/or L2 signaling, where the target cell is any candidate cell in the at least one candidate cell, and the L1 signaling and/or the L2 signaling is still sent on a communication resource of the source cell.

Step 4: The UE is handed over from the source cell to the target cell by performing the LTM handover, accesses the target cell by using resource configuration information that is received in step 1 and that corresponds to the target cell, and starts to communicate with the target cell (that is, communicate with the target DU, or perform communication on a communication resource of the target cell) after the access succeeds. When accessing the target cell, the UE may access the target cell through random access, but the random access may cause an interruption, and therefore the UE may access the target cell without the random access. For example, the UE sends an uplink message to the target cell by using an uplink grant (uplink grant, UL grant) (for example, a physical uplink shared channel (physical uplink shared channel, PUSCH)) of the target cell. After the target cell receives the uplink message, it may be considered that the UE is successfully handed over to the target cell.

Before executing the handover command, the UE obtains the uplink grant of the target cell in the following two manners.

Manner 1: The uplink grant is dynamically configured for the UE. For example, after receiving a cell handover notification sent by the source DU, the target DU sends a PDCCH message to the terminal device, where the PDCCH message indicates the uplink grant of the target cell. FIG. 4 is an existing schematic flowchart of dynamically configuring the uplink grant. As shown in FIG. 4, compared with those in FIG. 3, step A and step B are added between step 3 and step 4. Step A: The source DU sends a handover notification to the target DU via the CU. For example, the handover notification may include one or more of the following information: the identification information of the target cell, identification information of the UE, and information about a beam direction in which the UE communicates with the target cell. Step B: The target DU sends the uplink grant of the target cell to the UE.

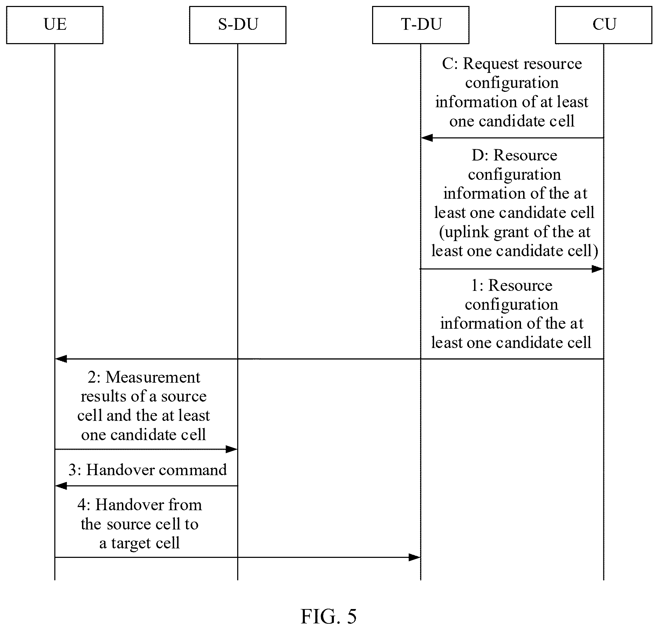

Manner 2: The uplink grant is pre-configured for the UE, and when providing configuration information of the target cell for the UE, the target DU includes the uplink grant of the target cell in the configuration information of the target cell. FIG. 5 is an existing schematic flowchart of pre-configuring the uplink grant. As shown in FIG. 5, compared with those in FIG. 3, step C and step D are added before step 1. Step C: The CU requests the resource configuration information of the at least one candidate cell from the target DU. Step D: The target DU provides the resource configuration information of the at least one candidate cell for the CU, where the resource configuration information of the at least one candidate cell includes an uplink grant of the at least one candidate cell, and the uplink grant is used by the UE to access the target cell without the random access. It may be understood that, in FIG. 3, step C and step D actually exist. Through step C and step D, the CU may obtain the resource configuration information of the at least one candidate cell, and send the resource configuration information to the UE in step 1. However, in FIG. 3, the resource configuration information of the at least one candidate cell may not include the uplink grant of the at least one candidate cell, but needs to include the uplink grant of the at least one candidate cell in FIG. 5.

It can be learned that, when the network device uses the CU-DU split architecture, if the terminal device needs to be handed over from a cell of the source DU (namely, the source cell) to a cell of the target DU (namely, the target cell) that belongs to or does not belong to a same CU as the source DU, the target DU may dynamically configure or pre-configure the uplink grant of the target cell for the terminal device, so that the terminal device can be handed over to the target cell without the random access by using the uplink grant of the target cell, to avoid the interruption caused by the random access. However, when the target DU dynamically configures the uplink grant of the target cell for the terminal device, there is interaction between the target DU and the source DU, resulting in an increase in an interruption time of the terminal device. However, when the target DU pre-configures the uplink grant of the target cell for the terminal device, the pre-configured uplink grant can be used only by one terminal device after being configured for the terminal device, and cannot be flexibly allocated to another terminal device, resulting in low uplink grant resource utilization of the target DU. It may be understood that, in embodiments of this application, only the LTM handover technology is used as an example. The technical solutions in embodiments of this application are also applicable to another handover technology for accessing the target cell without the random access.

For the foregoing problems, this application provides a cell handover method. The method may be applied to a scenario in which a first terminal device is handed over between a cell provided by a first network device and a cell provided by a second network device. The first network device is a network device to which at least one candidate cell of the first terminal device belongs, that is, the first network device provides the at least one candidate cell for the first terminal device. The second network device is a network device to which a source cell of the first terminal device belongs, that is, the first network device provides the source cell for the first terminal device. When the first network device and the second network device use a CU-DU split architecture, the first network device and the second network device may be different DUs belonging to a same CU, or may be different DUs belonging to different CUs. This is not limited in embodiments of this application.

According to the cell handover method provided in this application, the first network device, the second network device, and the first terminal device may negotiate to determine a configuration time of an uplink resource (for example, a PUSCH resource or a PUCCH resource) pre-configured by the first network device for the first terminal device, negotiate to determine an activation time of the uplink resource pre-configured by the first network device for the first terminal device, or negotiate to determine a configuration time of the uplink resource dynamically configured for the first terminal device. In this way, the first network device pre-configures or dynamically configures the uplink resource of the target cell for the first terminal device or activates the uplink resource, pre-configured for the first terminal device, only when the first terminal device needs to access a target cell on an uplink resource of the target cell. This reduces an interruption time of a terminal device, and improves uplink resource utilization of a network device.

Further, specifically, this application may include four possible technical solutions for whether the first network device and the second network device negotiate to determine the configuration time of the uplink resource pre-configured by the first network device for the first terminal device, or the first network device and the second network device negotiate to determine the activation time of the uplink resource pre-configured by the first network device for the first terminal device, or the first network device and the first terminal device negotiate to determine the configuration time of the uplink resource pre-configured by the first network device for the first terminal device, or the first network device and the second network device negotiate to determine the configuration time of the uplink resource dynamically configured for the first terminal device. For ease of description, the four technical solutions are respectively referred to as Solution 1, Solution 2, Solution 3, and Solution 4. The following describes Solution 1, Solution 2, Solution 3, and Solution 4 in detail.

### Solution 1

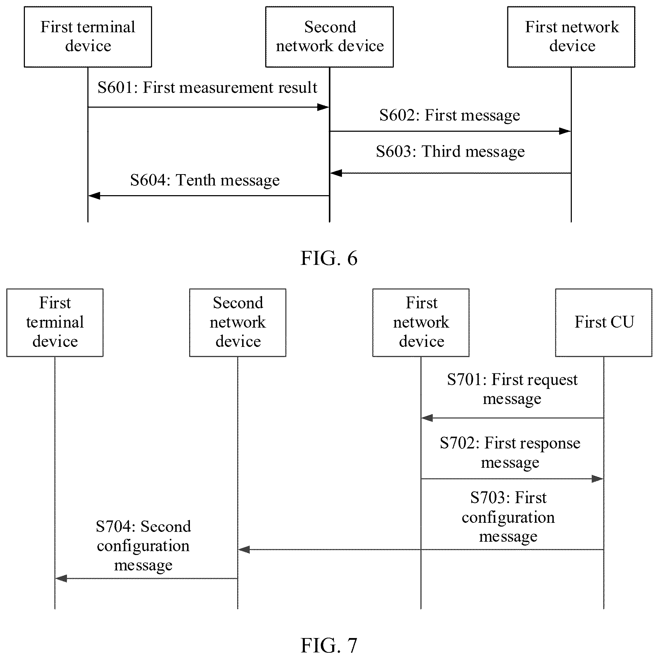

FIG. 6 is a schematic flowchart of a cell handover method according to an embodiment of this application. The method may be applied to but is not limited to being applied to the communication system shown in FIG. 1. In the method, the method includes the following steps.

S601: The first terminal device sends a first measurement result to the second network device, and correspondingly, the second network device receives the first measurement result from the first terminal device.

In this embodiment of this application, the first terminal device may send the first measurement result to the second network device. Correspondingly, the second network device may receive the first measurement result from the first terminal device. The first measurement result may include a measurement result corresponding to the source cell of the first terminal device and a measurement result corresponding to the at least one candidate cell of the first terminal device. The source cell may be a cell provided or managed by the second network device. The at least one candidate cell may be a cell provided or managed by the first network device. The at least one candidate cell may be a neighboring cell of the source cell. The first measurement result may be obtained by the first terminal device by measuring downlink reference signals of the source cell and the at least one candidate cell.

For example, that the first terminal device sends the first measurement result to the second network device may be as follows: The terminal device sends a first measurement message to the second network device, where the first measurement message includes the first measurement result.

For example, the first measurement message may be physical layer signaling (for example, PUCCH signaling), or may be a MAC CE message or an RRC message. This is not limited in embodiments of this application.

On a basis of the implementation process in FIG. 6, if a CU to which the first network device belongs is a first CU, and a CU to which the second network device belongs is also the first CU, that is, the first network device and the second network device are different DUs under a same CU, steps shown in FIG. 7 may be further performed in this application.

In S701, the first CU may send a first request message to the first network device, where the first request message may be used to request the first network device to provide a group of resource configuration information corresponding to the at least one candidate cell. For example, if the at least one candidate cell includes a cell 1 and a cell 2, the first request message may be used to request a group of resource configuration information corresponding to the cell 1 and a group of resource configuration information corresponding to the cell 2.

Each group of resource configuration information may include one or more of the following resource configuration information of a corresponding candidate cell:
a physical layer channel configuration (for example, a physical downlink shared channel (physical downlink shared channel, PDSCH) configuration, a PDCCH configuration, a PUSCH configuration, or a PUCCH configuration);
a downlink reference signal configuration (for example, a synchronization signal and physical broadcast channel block (synchronization signal and physical broadcast channel block, SSB) configuration or a channel state information reference signal (Channel State Information Reference Signal, CSI-RS) configuration); and
a random access resource configuration (for example, a random access preamble (preamble) or a random access time-frequency resource).

A physical layer uplink channel configuration (for example, a PUSCH configuration or a PUCCH configuration) in the physical layer channel configuration may be referred to as an uplink resource configuration of the candidate cell. The uplink resource configuration is used by the first terminal device to access the candidate cell. The downlink reference signal configuration may be referred to as a downlink synchronization configuration of the candidate cell. The downlink synchronization configuration is used by the first terminal device to perform downlink synchronization with the first network device. The random access resource configuration may be referred to as an uplink synchronization configuration of the candidate cell. The uplink synchronization configuration is used by the first terminal device to perform uplink synchronization with the first network device.

It may be understood that types and specific content of resource configuration information included in groups of resource configuration information corresponding to different candidate cells may be the same or different. This is not limited in embodiments of this application. For example, a group of resource configuration information corresponding to a candidate cell may include all of the types of resource configuration information listed above, but a group of resource configuration information corresponding to another candidate cell may include a part of the types of resource configuration information listed above. The first terminal device may consider that the part of resource configuration information that is not included is consistent with that of the source cell.

In S702, the first network device may send a first response message to the first CU, where the first response message may include the group of resource configuration information corresponding to the at least one candidate cell.

In S703, the first CU may send a first configuration message to the second network device, where the first configuration message may include the group of resource configuration information corresponding to the at least one candidate cell.

Optionally, the first configuration message may further include second indication information. The second indication information may indicate that the resource configuration information of the at least one candidate cell does not include an uplink resource of the at least one candidate cell, or the second indication information may indicate that the resource configuration information of the at least one candidate cell includes the uplink resource of the at least one candidate cell. The uplink resource is used by the first terminal device to access at least one candidate cell. For example, an uplink resource of the cell 1 may be used by a terminal device 1 to access the cell 1, and an uplink resource of the cell 2 may be used by the terminal device 1 to access the cell 2. For example, the uplink resource may be a pre-configured uplink grant resource (for example, a PUSCH resource), or may be a PUCCH resource.

For example, if the at least one candidate cell includes the cell 1 and the cell 2, the first configuration message includes the group of resource configuration information corresponding to the cell 1, the group of resource configuration information corresponding to the cell 1 includes the uplink resource of the cell 1, the first configuration message includes the group of resource configuration information corresponding to the cell 2, and the group of resource configuration information corresponding to the cell 2 does not include the uplink resource of the cell 2, the second indication information may indicate that the group of resource configuration information corresponding to the cell 1 does not include the uplink resource of the cell 1 and the group of resource configuration information corresponding to the cell 2 does not include the uplink resource of the cell 2.

In S704, the second network device may send a second configuration message to the first terminal device, where the second configuration message may include the group of resource configuration information corresponding to the at least one candidate cell.

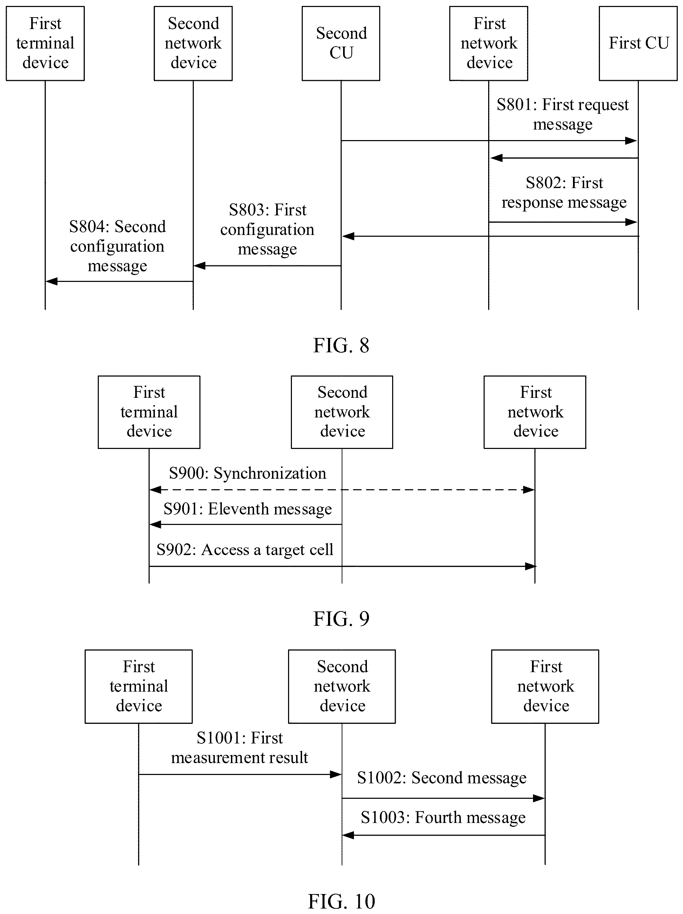

If the CU to which the first network device belongs is the first CU, and the CU to which the second network device belongs is a second CU, that is, the first network device and the second network device are different DUs under different CUs, steps shown in FIG. 8 may be further performed in this application.

In S801, the second CU may send the first request message to the first network device via the first CU.

In S802, the first network device may send the first response message to the second CU via the first CU.

In S803, the second CU may send the first configuration message to the second network device.

In S804, the second network device may send the second configuration message to the first terminal device.

S602: The second network device sends a first message to the first network device, and correspondingly, the first network device receives the first message from the second network device.

In this embodiment of this application, if the second network device has received the second indication information, and the second indication information indicates that the resource configuration information of the at least one candidate cell does not include the uplink resource (for example, referred to as a first uplink resource) of the at least one candidate cell, or if the second network device does not receive the second indication information, the second network device may send the first message to the first network device. Correspondingly, the first network device may receive the first message from the second network device.

In an implementation, the first message may be used to request the first network device to provide the first uplink resource. For example, if the at least one candidate cell includes the cell 1 and the cell 2, the first message may be used to request the first network device to provide the uplink resource of the cell 1 and the uplink resource of the cell 2.

In another implementation, the first message may be further used to request the first network device to provide synchronization configuration information (for example, referred to as first synchronization configuration information) of the at least one candidate cell. The first synchronization configuration information may include a downlink synchronization configuration (a downlink reference signal configuration, for example, an SSB configuration or a CSI-RS configuration) and/or an uplink synchronization configuration (a random access resource configuration, for example, a random access preamble or a random access time-frequency resource). The downlink synchronization configuration is used by the first terminal device to perform downlink synchronization with the first network device. The uplink synchronization configuration is used by the first terminal device to perform uplink synchronization with the first network device.

In still another implementation, the first message may alternatively not be used to request the first network device to provide the first uplink resource, but is used only to request the first network device to provide the first synchronization configuration information.

For example, the first message may include one or more of the following information: identification information of the at least one candidate cell; first uplink resource request information, where the first uplink resource request information is used to request the first network device to provide the first uplink resource; first synchronization configuration information request information, where the first synchronization configuration request information is used to request the first network device to provide the first synchronization configuration information; and beam direction indication information, where the beam direction indication information indicates the first network device to receive an uplink message from the first terminal device in a second beam direction.

In this embodiment of this application, if the CU to which the first network device belongs is the first CU, and the CU to which the second network device belongs is also the first CU, that is, the first network device and the second network device are different DUs under the same CU, the second network device can send the first message to the first network device via the first CU. Correspondingly, the first network device can receive the first message from the second network device via the first CU. If the CU to which the first network device belongs is the first CU, and the CU to which the second network device belongs is the second CU, that is, the first network device and the second network device are different DUs under different CUs, the second network device can send the first message to the first network device via the second CU and the first CU. Correspondingly, the first network device can receive the first message from the second network device via the second CU and the first CU.

On the basis of the implementation process in FIG. 6, steps shown in FIG. 9 may be further performed in this application.

In S901, the second network device may send an eleventh message to the first terminal device.

In an implementation, the eleventh message may include eleventh indication information. The eleventh indication information indicates the first terminal device to access the target cell. The target cell is any candidate cell in the at least one candidate cell.

In another implementation, the eleventh message may further include one or more of the following information: identification information of the target cell; twelfth indication information, indicating the first terminal device to be handed over to the target cell without random access; and thirteenth indication information, indicating the first terminal device to send the uplink message to the first network device on a first uplink resource of the target cell.

Optionally, before S901 is performed, S900 may be further performed: The first terminal device may synchronize with the first network device. The synchronization includes downlink synchronization and/or uplink synchronization. For example, the first terminal device may perform the downlink synchronization with the first network device based on the downlink reference signal configuration in the first synchronization configuration information. For example, the first terminal device may perform the uplink synchronization with the first network device based on the random access resource configuration in the first synchronization configuration information. For example, the first terminal device may send the random access preamble to the first network device, obtain a timing advance (Timing Advance, TA), and complete the uplink synchronization.

In S902, the first terminal device may access the target cell, to be specific, the first terminal device may be handed over from the source cell to the target cell by performing a cell handover. For example, the first terminal device may be handed over to the target cell without the random access. For example, the first terminal device may send the uplink message to the first network device on the first uplink resource of the target cell.

For example, the second network device may send the first message to the first network device before sending the eleventh message.

S603: The first network device sends a third message to the second network device, and correspondingly, the second network device receives the third message from the first network device.

In this embodiment of this application, the first network device may send the third message to the second network device. Correspondingly, the second network device receives the third message from the first network device. The third message may include information about the first uplink resource. For example, if the at least one candidate cell includes the cell 1 and the cell 2, the third message may include information about the uplink resource of the cell 1, information about the uplink resource of the cell 2, or the information about the uplink resource of the cell 1 and the information about the uplink resource of the cell 2.

For example, the information about the first uplink resource may include one or more of the following information: the first uplink resource; third indication information, indicating that the first network device has provided the first uplink resource, where for example, if the first network device has provided the first uplink resource in S702, the first network device does not provide the first uplink resource in S603; and fourth indication information, indicating that the first network device refuses to provide the first uplink resource, where for example, if the first network device determines that the first uplink resource is insufficient, the first network device refuses to provide the first uplink resource in S603.

For example, if the at least one candidate cell includes the cell 1, the cell 2, and a cell 3, the information about the first uplink resource may include the uplink resource of the cell 1. The information about the first uplink resource may further include the third indication information. The third indication information may indicate that the first network device has provided the uplink resource of the cell 2. The information about the first uplink resource may further include the fourth indication information. The fourth indication information may indicate that the first network device refuses to provide an uplink resource of the cell 3. Further, the second network device may determine, based on the uplink resource of the cell 1 and the third indication information, that the cell 1 and the cell 2 provide the uplink resources for the first terminal device, and determine, based on the fourth indication information, that the cell 3 does not provide the uplink resource for the first terminal device. Further, when performing S901, if the second network device determines that the cell 1 and the cell 2 are target cells, the second network device may indicate the first terminal device to be handed over to the cell 1 and the cell 2 without the random access; or if the second network device determines that the cell 3 is a target cell, the second network device may indicate the first terminal device to be handed over to the cell 3 through the random access. Further, when performing S901, if the second network device determines that the cell 1 and the cell 2 are target cells, the second network device may indicate the first terminal device to send the uplink message to the first network device on the uplink resources of the cell 1 and the cell 2.

In addition, the third message may further include the first synchronization configuration information. Alternatively, the third message may not include the first uplink resource, and includes only the first synchronization configuration information.

For example, the first synchronization configuration information may include the random access time-frequency resource of the at least one candidate cell. The random access time-frequency resource may indicate a first time domain position and/or a first frequency domain position at which the first terminal device synchronizes with the first network device. Further, when the second network device receives the third message from the first network device, the second network device may receive the third message from the first network device through an F1 interface, to sense the random access time-frequency resource included in the third message. Further, the second network device may determine, based on the sensed random access time-frequency resource, the first time domain position and/or the first frequency domain position at which the first terminal device synchronizes with the first network device, and stop, at the first time domain position and/or the first frequency domain position, scheduling data transmission for the first terminal device. In this way, communication between the first terminal device and the second network device can avoid the synchronization between the first terminal device and the first network device, thereby avoiding impact of the synchronization between the first terminal device and the first network device on the communication between the first terminal device and the second network device, and reducing a possibility of a packet loss in the source cell.

In this embodiment of this application, if the CU to which the first network device belongs is the first CU, and the CU to which the second network device belongs is also the first CU, that is, the first network device and the second network device are different DUs under the same CU, the first network device can send the third message to the second network device via the first CU. Correspondingly, the second network device can receive the third message from the first network device via the first CU. If the CU to which the first network device belongs is the first CU, and the CU to which the second network device belongs is the second CU, that is, the first network device and the second network device are different DUs under different CUs, the first network device can send the third message to the second network device via the first CU and the second CU. Correspondingly, the second network device can receive the third message from the first network device via the first CU and the second CU.

S604: The second network device sends a tenth message to the first terminal device, and correspondingly, the first terminal device receives the tenth message from the first network device.

In this embodiment of this application, the second network device may send the tenth message to the first terminal device. Correspondingly, the first terminal device receives the tenth message from the first network device. The tenth message may include the first uplink resource.

For example, the tenth message may be physical layer signaling (for example, PDCCH signaling), or may be a MAC CE message or an RRC message. This is not limited in embodiments of this application.

It can be learned from the foregoing content that, in Solution 1 in embodiments of this application, the first network device and the second network device can negotiate to determine the configuration time of the uplink resource of the cell pre-configured by the first network device for the first terminal device. In this way, the first network device pre-configures the uplink resource of the cell for the first terminal device only when the first network device receives a configuration request (namely, the first message) of the second network device, to be specific, when the first terminal device needs to access the cell on the uplink resource of the cell. This reduces the interruption time of the terminal device, and improves the uplink resource utilization of the network device.

### Solution 2

FIG. 10 is a schematic flowchart of another cell handover method according to an embodiment of this application. The method may be applied to but is not limited to being applied to the communication system shown in FIG. 1. The method includes the following steps.

S1001: The first terminal device sends a first measurement result to the second network device, and correspondingly, the second network device receives the first measurement result.

In this embodiment of this application, for related descriptions of the "first measurement result" in S1001, refer to the descriptions of S601. Details are not described herein again.

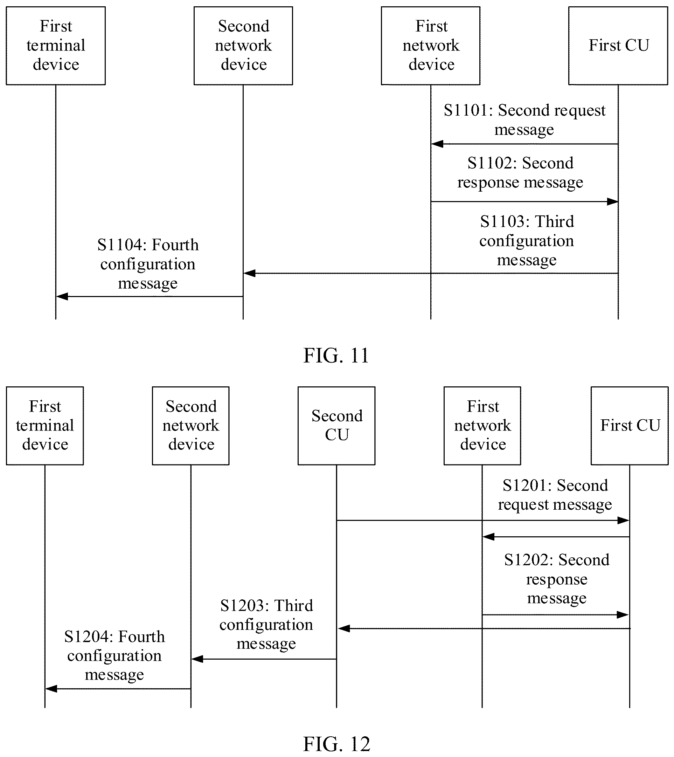

In this embodiment of this application, on a basis of the implementation process in FIG. 10, if a CU to which the first network device belongs is a first CU, and a CU to which the second network device belongs is also the first CU, that is, the first network device and the second network device are different DUs under a same CU, steps shown in FIG. 11 may be further performed in this application.

In S1101, the first CU may send a second request message to the first network device, where the second request message may be used to request the first network device to provide a group of resource configuration information corresponding to the at least one candidate cell. Optionally, the second request message may be further used to request an uplink resource of the at least one candidate cell included in the group of resource configuration information corresponding to the at least one candidate cell. The uplink resource is used by the first terminal device to access the at least one candidate cell. For example, the uplink resource may be a pre-configured uplink grant resource (for example, a PUSCH resource), or may be a PUCCH resource. For example, if the at least one candidate cell includes a cell 1 and a cell 2, the second request message may be used to request a group of resource configuration information corresponding to the cell 1 and a group of resource configuration information corresponding to the cell 2, where the group of resource configuration information corresponding to the cell 1 includes an uplink resource of the cell 1, and the group of resource configuration information corresponding to the cell 2 includes an uplink resource of the cell 2.

In S1102, the first network device may send a second response message to the first CU, where the second response message may include the group of resource configuration information corresponding to the at least one candidate cell. Optionally, the group of resource configuration information corresponding to the at least one candidate cell may include the uplink resource of the at least one candidate cell.

In S1103, the first CU may send a third configuration message to the second network device, where the third configuration message may include the group of resource configuration information corresponding to the at least one candidate cell. Optionally, the group of resource configuration information corresponding to the at least one candidate cell may include the uplink resource of the at least one candidate cell.

Optionally, the third configuration message may further include second indication information. The second indication information may indicate that the resource configuration information of the at least one candidate cell does not include the uplink resource of the at least one candidate cell, or the second indication information may indicate that the resource configuration information of the at least one candidate cell includes the uplink resource of the at least one candidate cell.

For example, if the at least one candidate cell includes the cell 1 and the cell 2, the first configuration message includes the group of resource configuration information corresponding to the cell 1, the group of resource configuration information corresponding to the cell 1 includes the uplink resource of the cell 1, the first configuration message includes the group of resource configuration information corresponding to the cell 2, and the group of resource configuration information corresponding to the cell 2 does not include the uplink resource of the cell 2, the second indication information may indicate that the group of resource configuration information corresponding to the cell 1 does not include the uplink resource of the cell 1 and the group of resource configuration information corresponding to the cell 2 does not include the uplink resource of the cell 2.

In S1104, the second network device may send a fourth configuration message to the first terminal device, where the fourth configuration message may include the group of resource configuration information corresponding to the at least one candidate cell. Optionally, the group of resource configuration information corresponding to the at least one candidate cell includes the uplink resource of the at least one candidate cell.

If the CU to which the first network device belongs is the first CU, and the CU to which the second network device belongs is a second CU, that is, the first network device and the second network device are different DUs under different CUs, steps shown in FIG. 12 may be further performed in this application.

In S1201, the second CU may send the second request message to the first network device via the first CU.

In S1202, the first network device may send the second response message to the second CU via the first CU.

In S1203, the second CU may send the third configuration message to the second network device.

In S1204, the second network device may send the fourth configuration message to the first terminal device.

S1002: The second network device sends a second message to the first network device, and correspondingly, the first network device receives the second message from the second network device.

In this embodiment of this application, if the second network device has received the second indication information, and the second indication information indicates that the resource configuration information of the at least one candidate cell includes the uplink resource (for example, referred to as a second uplink resource) of the at least one candidate cell, the second network device may send the second message to the first network device. Correspondingly, the first network device may receive the second message from the second network device. The second message may be used to request the first network device to activate the second uplink resource. For example, if the at least one candidate cell includes the cell 1 and the cell 2, the second message may be used to request the first network device to activate the uplink resource of the cell 1 and the uplink resource of the cell 2.

It may be understood that, when the second message is used to request the first network device to activate the second uplink resource, if the first network device activates the second uplink resource, the first network device needs to receive an uplink message from the first terminal device at a time domain position and/or a frequency domain position corresponding to the second uplink resource; or if the first network device does not activate the second uplink resource, the first network device does not need to receive the uplink message from the first terminal device at the time domain position and/or the frequency domain position corresponding to the second uplink resource, but may allocate the second uplink resource to another terminal device (for example, a second terminal device) for use, to improve uplink resource utilization.

For example, the second message may include one or more of the following information: identification information of the at least one candidate cell; and fifth indication information, indicating the first network device to activate a second uplink resource at a second time domain position, to be specific, the first network device to receive, at the second time domain position, the uplink message sent by the first terminal device on the second uplink resource.

In this embodiment of this application, if the CU to which the first network device belongs is the first CU, and the CU to which the second network device belongs is also the first CU, that is, the first network device and the second network device are different DUs under the same CU, the second network device can send the second message to the first network device via the first CU. Correspondingly, the first network device can receive the second message from the second network device via the first CU. If the CU to which the first network device belongs is the first CU, and the CU to which the second network device belongs is the second CU, that is, the first network device and the second network device are different DUs under different CUs, the second network device can send the second message to the first network device via the second CU and the first CU. Correspondingly, the first network device can receive the second message from the second network device via the second CU and the first CU.

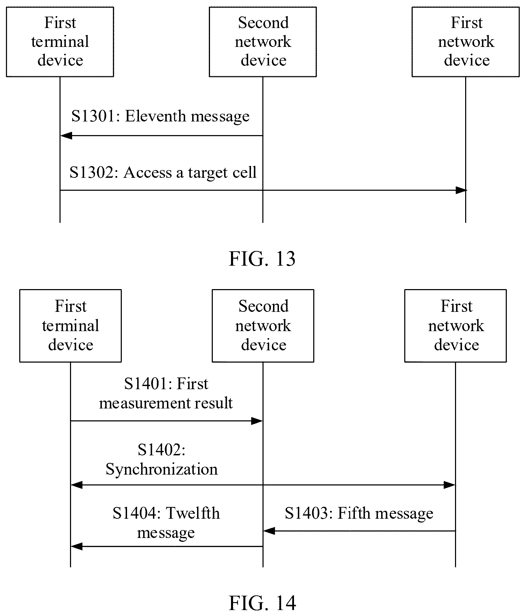

On the basis of the implementation process in FIG. 10, steps shown in FIG. 13 may be further performed in this application.

In S1301, the second network device may send an eleventh message to the first terminal device.

In an implementation, the eleventh message may include eleventh indication information. The eleventh indication information indicates the first terminal device to access the target cell. The target cell is any candidate cell in the at least one candidate cell.

In another implementation, the eleventh message may further include one or more of the following information: identification information of the target cell; twelfth indication information, indicating the first terminal device to be handed over to the target cell without random access; thirteenth indication information, indicating the first terminal device to send the uplink message to the first network device on a second uplink resource of the target cell; and fourteenth indication information, indicating that the second uplink resource of the target cell has been activated.

In S1302, the first terminal device may access the target cell, to be specific, the first terminal device may be handed over from the source cell to the target cell by performing a cell handover. For example, the first terminal device may be handed over to the target cell without the random access. For example, the first terminal device may send the uplink message to the first network device on the second uplink resource of the target cell.

For example, the second network device may send the second message to the first network device before sending the eleventh message, after sending the eleventh message, or when sending the eleventh message.

S1003: The first network device sends a fourth message to the second network device, and correspondingly, the second network device receives the fourth message from the first network device.

In this embodiment of this application, the first network device may send the fourth message to the second network device. Correspondingly, the second network device may receive the fourth message from the first network device.

In an implementation, the fourth message may include first indication information. The first indication information may indicate that the first network device has activated the second uplink resource. For example, if the at least one candidate cell includes the cell 1 and the cell 2, the fourth message may include first indication information, and the first indication information may indicate that the first network device has activated the uplink resource of the cell 1, or the first network device has activated the uplink resource of the cell 2, or the first network device has activated the uplink resource of the cell 1 and the uplink resource of the cell 2.

In another implementation, when there are one or more second uplink resources, the fourth message may further include one or more of the following information: sixth indication information, indicating that the first network device has activated one second uplink resource; and seventh indication information, indicating that the first network device has activated any one of a plurality of second uplink resources. For example, if there is one uplink resource of the cell 1: an uplink resource 11, and there are two uplink resources of the cell 2: an uplink resource 21 and an uplink resource 22, the fourth message may further include the sixth indication information, where the sixth indication information indicates that the first network device has activated the uplink resource 11 of the cell 1; and the fourth message may further include the seventh indication information, where the seventh indication information indicates that the first network device has activated the uplink resource 21 of the cell 2.

In this embodiment of this application, if the CU to which the first network device belongs is the first CU, and the CU to which the second network device belongs is also the first CU, that is, the first network device and the second network device are different DUs under the same CU, the first network device can send the fourth message to the second network device via the first CU. Correspondingly, the second network device can receive the fourth message from the first network device via the first CU. If the CU to which the first network device belongs is the first CU, and the CU to which the second network device belongs is the second CU, that is, the first network device and the second network device are different DUs under different CUs, the first network device can send the fourth message to the second network device via the first CU and the second CU. Correspondingly, the second network device can receive the fourth message from the first network device via the first CU and the second CU.

It can be learned from the foregoing content that, in Solution 2 in embodiments of this application, the first network device and the second network device can negotiate to determine the activation time of the uplink resource of the cell pre-configured by the first network device for the first terminal device. In this way, the first network device activates the uplink resource pre-configured for the first terminal device only when the first network device receives an activation request (namely, the second message) of the second network device, to be specific, when the first terminal device needs to access the cell on the uplink resource of the cell. This reduces the interruption time of the terminal device, and improves the uplink resource utilization of the network device.

### Solution 3

FIG. 14 is a schematic flowchart of another cell handover method according to an embodiment of this application. The method may be applied to but is not limited to being applied to the communication system shown in FIG. 1. The method includes the following steps.

S1401: The first terminal device sends a first measurement result to the second network device, and correspondingly, the second network device receives the first measurement result.

In this embodiment of this application, for related descriptions of the "first measurement result" in S1401, refer to the descriptions of S601. Details are not described herein again.

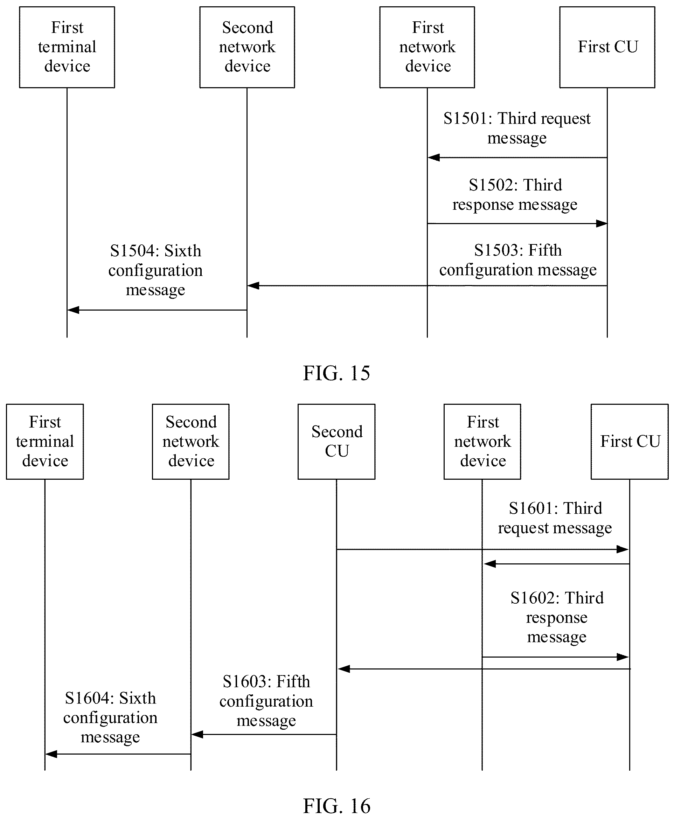

On a basis of the implementation process in FIG. 14, if a CU to which the first network device belongs is a first CU, and a CU to which the second network device belongs is also the first CU, that is, the first network device and the second network device are different DUs under a same CU, steps shown in FIG. 15 may be further performed in this application.

In S1501, the first CU may send a third request message to the first network device, where the third request message may be used to request the first network device to provide a group of resource configuration information corresponding to the at least one candidate cell. For example, if the at least one candidate cell includes a cell 1 and a cell 2, the third request message may be used to request a group of resource configuration information corresponding to the cell 1 and a group of resource configuration information corresponding to the cell 2.

In S1502, the first network device may send a third response message to the first CU, where the third response message may include the group of resource configuration information corresponding to the at least one candidate cell. Optionally, the group of resource configuration information corresponding to the at least one candidate cell may include synchronization configuration information (for example, referred to as second synchronization configuration information) of the at least one candidate cell. The second synchronization configuration information may include one or more of the following information: a downlink synchronization configuration (a downlink reference signal configuration, for example, an SSB configuration or a CSI-RS configuration), used by the first terminal device to perform downlink synchronization with the first network device; an uplink synchronization configuration (a random access resource configuration, for example, a random access preamble or a random access time-frequency resource), used by the first terminal device to perform uplink synchronization with the first network device; search space configuration information, used by the first terminal device to receive a second message MSG2 (for example, a random access response) in a random access process; and physical uplink shared channel configuration information, used by the first terminal device to send a second message MSG3 (for example, a PUSCH configuration) in the random access process.

In S1503, the first CU may send a fifth configuration message to the second network device, where the fifth configuration message may include the group of resource configuration information corresponding to the at least one candidate cell. Optionally, the group of resource configuration information corresponding to the at least one candidate cell may include the second synchronization configuration information.

In S1504, the second network device may send a sixth configuration message to the first terminal device, where the sixth configuration message may include the group of resource configuration information corresponding to the at least one candidate cell. Optionally, the group of resource configuration information corresponding to the at least one candidate cell may include the second synchronization configuration information.

If the CU to which the first network device belongs is the first CU, and the CU to which the second network device belongs is a second CU, that is, the first network device and the second network device are different DUs under different CUs, steps shown in FIG. 16 may be further performed in this application.

In S1601, the second CU may send the third request message to the first network device via the first CU.

In S 1602, the first network device may send the third response message to the second CU via the first CU.

In S1603, the second CU may send the fifth configuration message to the second network device.

In S 1604, the second network device may send the sixth configuration message to the first terminal device.

S1402: The first terminal device synchronizes with the first network device.

In this embodiment of this application, the synchronization includes downlink synchronization and/or uplink synchronization. For example, the first terminal device may perform the downlink synchronization with the first network device based on the downlink reference signal configuration in the second synchronization configuration information. For example, the first terminal device may perform the uplink synchronization with the first network device based on the random access resource configuration in the second synchronization configuration information. For example, the first terminal device may send the random access preamble to the first network device, obtain a TA, and complete the uplink synchronization.

S1403: When having completed the synchronization with the first terminal device, the first network device sends a fifth message to the second network device, and correspondingly, the second network device receives the fifth message from the first network device.

In this embodiment of this application, the first network device may send the fifth message to the second network device when the first network device has completed the synchronization with the first terminal device. Correspondingly, the second network device may receive the fifth message from the first network device.

In an implementation, the fifth message may include an uplink resource (for example, referred to as a first uplink resource) of the at least one candidate cell. The first uplink resource is used by the first terminal device to access the at least one candidate cell.

For example, when not receiving a sixth message from the first terminal device at a third time domain position, the first network device may determine that the first network device has completed the synchronization with the first terminal device, and send the fifth message to the second network device. A difference between the third time domain position and a fourth time domain position is greater than a first threshold. The fourth time domain position is a time domain position at which the first network device sends a seventh message to the first terminal device. The sixth message is a retransmitted message of a first message MSG1 (for example, the random access preamble) in the random access process. The seventh message is MSG2 in the random access process.

Alternatively, when the first network device receives an eighth message from the first terminal device, the first network device may determine that the first network device has completed the synchronization with the first terminal device, and send the fifth message to the second network device. The eighth message is MSG3 in the random access process. The eighth message may include a cause value. The cause value may indicate the first terminal device to access the at least one candidate cell in the random access process, or the cause value may indicate the first terminal device to complete the synchronization with the first network device in the random access process. For example, when the first terminal device synchronizes with the first network device, the first terminal device may indicate, in the eighth message by using the cause value, that the current random access process is to complete the synchronization with the first network device. Alternatively, when the first terminal device synchronizes with the first network device, the first terminal device receives an eleventh message from the second network device. The eleventh message may include eleventh indication information. The eleventh indication information may indicate the first terminal device to access the target cell. The target cell is any candidate cell in the at least one candidate cell. Identification information of the target cell included in the eleventh message is the same as identification information of a candidate cell with which the first terminal device is synchronizing. The first terminal device may indicate, in the eighth message by using the cause value, that the current random access process is to access the candidate cell.

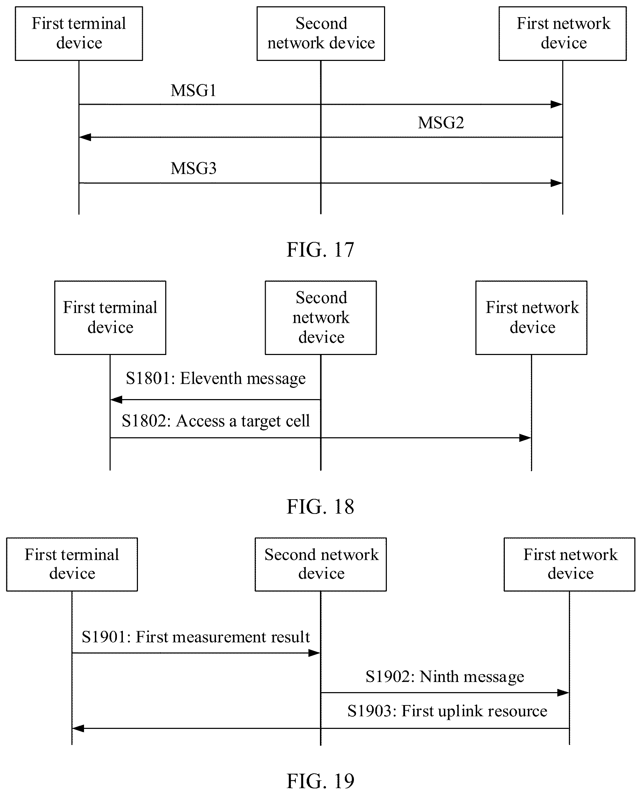

For example, FIG. 17 is a schematic flowchart of a random access process according to an embodiment of this application. As shown in FIG. 17, when the first terminal device synchronizes with the first network device, the first terminal device may send MSG1 to the first network device, the first network device may send MSG2 to the first terminal device, and the first terminal device may send MSG3 to the first network device. If the first network device does not receive the retransmitted message of MSG1 from the first terminal device at the third time domain position after sending MSG2 to the first terminal device at the fourth time domain position, the first network device may determine that the first network device has completed the synchronization with the first terminal device. If the first network device receives MSG3 from the first terminal device, the first network device may determine that the first network device has completed the synchronization with the first terminal device.

In another implementation, the fifth message may further include one or more of the following information: identification information of the at least one candidate cell; eighth indication information, indicating that the first network device has completed the synchronization with the first terminal device; and ninth indication information, indicating that the first network device has provided the first uplink resource.

In this embodiment of this application, if the CU to which the first network device belongs is the first CU, and the CU to which the second network device belongs is also the first CU, that is, the first network device and the second network device are different DUs under the same CU, the first network device can send the fifth message to the second network device via the first CU. Correspondingly, the second network device can receive the fifth message from the first network device via the first CU. If the CU to which the first network device belongs is the first CU, and the CU to which the second network device belongs is the second CU, that is, the first network device and the second network device are different DUs under different CUs, the first network device can send the fifth message to the second network device via the first CU and the second CU. Correspondingly, the second network device can receive the fifth message from the first network device via the first CU and the second CU.

S1404: The second network device sends a twelfth message to the first terminal device, and correspondingly, the first terminal device receives the twelfth message from the first network device.

In this embodiment of this application, the second network device may send the twelfth message to the first terminal device. Correspondingly, the first terminal device may receive the twelfth message from the first network device. The twelfth message may include the first uplink resource.

For example, the twelfth message may be physical layer signaling (for example, PDCCH signaling), or may be a MAC CE message or an RRC message. This is not limited in embodiments of this application.

On the basis of the implementation process in FIG. 14, steps shown in FIG. 18 may be further performed in this application.

In S1801, the second network device may send the eleventh message to the first terminal device.

In an implementation, the eleventh message may include the eleventh indication information. The eleventh indication information indicates the first terminal device to access the target cell. The target cell is any candidate cell in the at least one candidate cell.

In another implementation, the eleventh message may further include one or more of the following information: the identification information of the target cell; twelfth indication information, indicating the first terminal device to be handed over to the target cell without random access; and thirteenth indication information, indicating the first terminal device to send an uplink message to the first network device on a first uplink resource of the target cell.

In S1802, the first terminal device may access the target cell, to be specific, the first terminal device may be handed over from the source cell to the target cell by performing a cell handover. For example, the first terminal device may be handed over to the target cell without the random access. For example, the first terminal device may send the uplink message to the first network device on the first uplink resource of the target cell.

It can be learned from the foregoing content that, in Solution 3 in embodiments of this application, the first network device and the first terminal device can negotiate to determine the configuration time of the uplink resource of the cell pre-configured by the first network device for the first terminal device. In this way, the first network device pre-configures the uplink resource of the cell for the first terminal device only when the first network device determines that the first network device has completed the synchronization with the first terminal device, to be specific, when the first terminal device needs to access the cell on the uplink resource of the cell. This reduces the interruption time of the terminal device, and improves the uplink resource utilization of the network device.

### Solution 4

FIG. 19 is a schematic flowchart of another cell handover method according to an embodiment of this application. The method may be applied to but is not limited to being applied to the communication system shown in FIG. 1. The method includes the following steps.

S1901: The first terminal device sends a first measurement result to the second network device, and correspondingly, the second network device receives the first measurement result.

In this embodiment of this application, for S1901, refer to the descriptions of S601. Details are not described herein again.

S1902: The second network device sends a ninth message to the first network device, and correspondingly, the first network device receives the ninth message from the second network device.

In this embodiment of this application, the second network device may send the ninth message to the first network device. Correspondingly, the first network device may receive the ninth message from the second network device.

In an implementation, the ninth message may include tenth indication information. The tenth indication information indicates the first network device to send a first uplink resource of the target cell to the first terminal device at a fifth time domain position or a time domain position after the fifth time domain position. The target cell is any candidate cell in the at least one candidate cell. The first uplink resource is used by the first terminal device to access the target cell. Alternatively, the tenth indication information indicates the first network device to receive an uplink message from the first terminal device at the fifth time domain position or the time domain position after the fifth time domain position (to be specific, the fifth time domain position or the time domain position after the fifth time domain position is a time domain position of the first uplink resource).

In another implementation, the ninth message may further include one or more of the following information: identification information of the target cell; and eleventh indication information, indicating the first network device to send the first uplink resource to the first terminal device in a first beam direction, or indicating the first network device to receive the uplink message from the first terminal device in a second beam direction.

In this embodiment of this application, if a CU to which the first network device belongs is a first CU, and a CU to which the second network device belongs is also the first CU, that is, the first network device and the second network device are different DUs under a same CU, the second network device can send the ninth message to the first network device via the first CU. Correspondingly, the first network device can receive the ninth message from the second network device via the first CU.

It may be understood that, when a handover is a handover without random access, the second network device may send the ninth message to the first network device via the first CU. Specifically, the second network device sends a ninth message A to the first CU. In addition to the information that may be included in the ninth message, the ninth message A may further include information indicating that the current handover is the handover without the random access. When determining, based on the information in the ninth message A, that the current handover is the handover without the random access, the first CU needs to further send a ninth message B to the first network device. The ninth message B includes one or more of the information in the ninth message A.

When a handover is a handover through the random access, the second network device may send a ninth message A via the first CU. In addition to the information that may be included in the ninth message, the ninth message A may further include information indicating that the current handover is the handover through the random access. When determining, based on the information in the ninth message A, that the current handover is the handover through the random access, the first CU does not need to send a ninth message B to the first network device. The ninth message B includes one or more of the information in the ninth message A.

To be specific, the first CU may further determine, based on whether the current handover is the handover without the random access, which is indicated in the ninth message A, whether the ninth message (namely, the ninth message B) needs to be sent to the first network device. In a scenario of the handover without the random access, the first network device needs to receive the ninth message (namely, the ninth message B). That is, in a scenario of the handover through the random access, the first network device does not need to receive the ninth message (namely, the ninth message B).

If the CU to which the first network device belongs is the first CU, and the CU to which the second network device belongs is the second CU, that is, the first network device and the second network device are different DUs under different CUs, the second network device can send the ninth message to the first network device via the second CU and the first CU. Correspondingly, the first network device can receive the ninth message from the second network device via the second CU and the first CU.

It may be understood that, when a handover is a handover without the random access, the second CU needs to send the ninth message to the first CU; and when a handover is a handover through the random access, the second CU does not need to send the ninth message to the first CU.

In this embodiment of this application, the second network device may further send a thirteenth message to the first terminal device. The thirteenth message indicates the first terminal device to access the target cell at the fifth time domain position or the time domain position after the fifth time domain position. To be specific, the thirteenth message indicates the first terminal device to send the uplink message to the first network device at the fifth time domain position or the time domain position after the fifth time domain position.

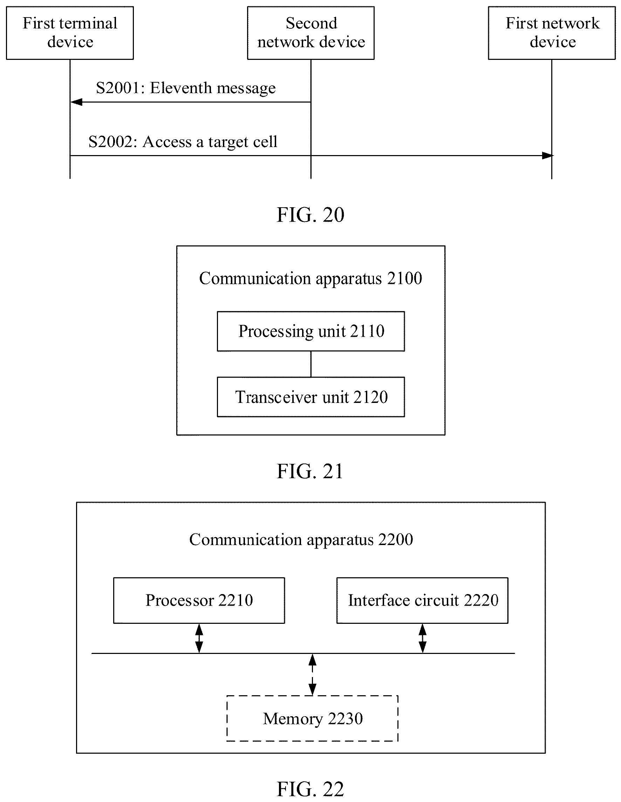

On a basis of the implementation process in FIG. 19, steps shown in FIG. 20 may be further performed in this application.

In S2001, the second network device may send an eleventh message to the first terminal device.

In an implementation, the eleventh message may include the eleventh indication information. The eleventh indication information indicates the first terminal device to access the target cell. The target cell is any candidate cell in the at least one candidate cell.

In another implementation, the eleventh message may further include one or more of the following information: the identification information of the target cell; twelfth indication information, indicating the first terminal device to be handed over to the target cell without the random access; and thirteenth indication information, indicating the first terminal device to send the uplink message to the first network device on the first uplink resource of the target cell.

In S2002, the first terminal device may access the target cell, to be specific, the first terminal device may be handed over from the source cell to the target cell by performing a cell handover. For example, the first terminal device may be handed over to the target cell without the random access. For example, the first terminal device may send the uplink message to the first network device on the first uplink resource of the target cell.

For example, the second network device may send the ninth message to the first network device at a seventh time domain position. The seventh time domain position is a time domain position before a time domain position at which second network device sends the eleventh message to the first terminal device, after a time domain position at which second network device sends the eleventh message to the first terminal device, or at which the second network device sends the eleventh message to the first terminal device.

S1903: The first network device sends the first uplink resource to the first terminal device at the fifth time domain position or the time domain position after the fifth time domain position. Correspondingly, the first terminal device receives the first uplink resource from the first network device at the fifth time domain position or the time domain position after the fifth time domain position.

In this embodiment of this application, the first network device may send the first uplink resource to the first terminal device at the fifth time domain position or the time domain position after the fifth time domain position. Correspondingly, the first terminal device receives the first uplink resource from the first network device at the fifth time domain position or the time domain position after the fifth time domain position.

For example, that the first network device sends the first uplink resource of the target cell to the first terminal device at the fifth time domain position or the time domain position after the fifth time domain position may be as follows: The first network device sends a seventh configuration message to the first terminal device at the fifth time domain position or the time domain position after the fifth time domain position, where the seventh configuration message includes the first uplink resource of the target cell.

For example, the seventh configuration message may be physical layer signaling (for example, PDCCH signaling), or may be a MAC CE message or an RRC message. This is not limited in embodiments of this application.

It can be learned from the foregoing content that, in Solution 4 in embodiments of this application, the first network device and the second network device can negotiate to determine the configuration time of the uplink resource of the cell dynamically configured by the first network device for the first terminal device. In this way, the first network device dynamically configures the uplink resource of the cell for the first terminal device only at the time domain position indicated by the second network device, to be specific, when the first network device needs to access the cell on the uplink resource of the cell. This reduces the interruption time of the terminal device, and improves the uplink resource utilization of the network device.

It may be understood that, to implement the functions in the foregoing embodiments, a network device and a terminal device include corresponding hardware structures and/or software modules for performing the functions. A person skilled in the art should be easily aware that, in combination with the units and the method steps in the examples described in embodiments disclosed in this application, this application can be implemented by hardware or a combination of the hardware and computer software. Whether a function is performed by hardware or hardware driven by computer software depends on particular application scenarios and design constraints of the technical solutions.

FIG. 21 is a diagram of a structure of a possible communication apparatus according to an embodiment of this application. The communication apparatus may be configured to implement functions of the network device or the terminal device in the foregoing method embodiments, and therefore can also implement beneficial effect of the foregoing method embodiments. In this embodiment of this application, the communication apparatus may be the network device shown in FIG. 1, or may be the terminal device shown in FIG. 1, or may be a module (for example, a chip) used in the network device or the terminal device.

As shown in FIG. 21, the communication apparatus 2100 includes a processing unit 2110 and a transceiver unit 2120. The processing unit 2110 is configured to control the transceiver unit 2120 to implement the functions of the network device or the terminal device in the foregoing method embodiments. The terminal device may be the first terminal device. The network device may be the first network device, or may be the second network device.

For example, when the communication apparatus 2100 is configured to implement functions of the first network device in the foregoing method embodiments, the transceiver unit 2120 is used by the first network device to: receive a first message or a second message from a second network device, where the first message is used to request the first network device to provide a first uplink resource of at least one candidate cell, the second message is used to request the first network device to activate a second uplink resource of the at least one candidate cell, and the first uplink resource and the second uplink resource are used by a first terminal device to access the at least one candidate cell; send a third message to the second network device based on the first message, or send a fourth message to the second network device based on the second message, where the third message includes information about the first uplink resource, the fourth message includes first indication information, and the first indication information indicates that the first network device has activated the second uplink resource; and send resource configuration information of the at least one candidate cell and second indication information to the second network device; or is used by the first network device to send a fifth message to a second network device when synchronization with a first terminal device is completed, where the fifth message includes a first uplink resource of at least one candidate cell, and the first uplink resource is used by the first terminal device to access the at least one candidate cell; or is used by the first network device to: receive a ninth message from a second network device, where the ninth message includes tenth indication information, the tenth indication information indicates the first network device to send a first uplink resource of a target cell to a first terminal device at a fifth time domain position or a time domain position after the fifth time domain position, the target cell is any candidate cell in at least one candidate cell, and the first uplink resource is used by the first terminal device to access the target cell; and send the first uplink resource to the first terminal device at the fifth time domain position or the time domain position after the fifth time domain position.

For example, when the communication apparatus 2100 is configured to implement functions of the second network device in the foregoing method embodiments, the transceiver unit 2120 is used by the second network device to: receive a first measurement result from a first terminal device, where the first measurement result includes measurement results corresponding to a source cell and at least one candidate cell; send a first message or a second message to a first network device, where the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and receive a third message from the first network device based on the first message and send a tenth message to the first terminal device, or receive a fourth message from the first network device based on the second message, where the third message includes information about the first uplink resource, the tenth message includes the first uplink resource, the fourth message includes first indication information, and the first indication information indicates that the first network device has activated the second uplink resource; or is configured to: receive a first measurement result from a first terminal device, where the first measurement result includes measurement results corresponding to a source cell and at least one candidate cell of the first terminal device; receive a fifth message from a first network device, where the fifth message includes a first uplink resource of the at least one candidate cell, and the first uplink resource is used by the first terminal device to access the at least one candidate cell; and send a twelfth message to the first terminal device, where the twelfth message includes the first uplink resource; or is configured to: receive a first measurement result from a first terminal device, where the first measurement result includes measurement results corresponding to a source cell and at least one candidate cell of the first terminal device; and send a ninth message to a first network device, where the ninth message includes tenth indication information, the tenth indication information indicates the first network device to send a first uplink resource of a target cell to the first terminal device at a fifth time domain position or a time domain position after the fifth time domain position, the target cell is any candidate cell in the at least one candidate cell, and the first uplink resource is used by the first terminal device to access the target cell.

For example, when the communication apparatus 2100 is configured to implement functions of the first terminal device in the foregoing method embodiments, the transceiver unit 2120 is used by the first terminal device to: send a first measurement result to a second network device, and receive a tenth message from a first network device, where the first measurement result includes measurement results corresponding to a source cell and at least one candidate cell, and the tenth message includes a first uplink resource.

For more detailed descriptions of the processing unit 2110 and the transceiver unit 2120, directly refer to related descriptions in the foregoing method embodiments. Details are not described herein.

FIG. 22 is a diagram of a structure of another possible communication apparatus according to an embodiment of this application. The communication apparatus 2200 includes a processor 2210 and an interface circuit 2220. The processor 2210 and the interface circuit 2220 are coupled to each other. It may be understood that the interface circuit 2220 may be a transceiver or an input/output interface. Optionally, the communication apparatus 2200 may further include a memory 2230, configured to store instructions to be executed by the processor 2210, or store input data required by the processor 2210 to run instructions, or store data generated after the processor 2210 runs instructions.

When the communication apparatus 2200 is configured to implement the method in the foregoing method embodiments, the processor 2210 is configured to implement functions of the processing unit 2110, and the interface circuit 2220 is configured to implement functions of the transceiver unit 2120.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device; or the chip in the terminal device sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal device to the network device; or the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Based on a same technical concept, an embodiment of this application further provides a computer-readable storage medium, including a program or instructions. When the program or the instructions are run on a computer, the method in the foregoing method embodiments is performed.

Based on a same technical concept, an embodiment of this application further provides a computer program product, including instructions. When the instructions are run on a computer, the method in the foregoing method embodiments is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus configured to implement a specified function in one or more procedures in the flowcharts and/or a specified function in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more procedures in the flowcharts and/or a specified function in one or more blocks in the block diagrams.

These computer program instructions may alternatively be loaded onto a computer or another programmable data processing device, so that a series of operations and steps are performed on the computer or the another programmable device to generate computer-implemented processing. In this way, the instructions executed on the computer or the another programmable device provide steps for implementing a specified function in one or more procedures in the flowcharts and/or a specified function in one or more blocks in the block diagrams.

It is clear that a person skilled in the art can make various modifications and variations to this application without departing from the spirit and scope of this application. In this case, this application is also intended to cover these modifications and variations of this application provided that they fall within the scope of the claims of this application and their equivalent technologies.

## Claims

1. A cell handover method, applied to a first network device, wherein the first network device provides at least one candidate cell for a first terminal device, and the method comprises:
receiving a first message or a second message from a second network device, wherein the second network device provides a source cell for the first terminal device, the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and
sending a third message to the second network device based on the first message, or sending a fourth message to the second network device based on the second message, wherein the third message comprises information about the first uplink resource, the fourth message comprises first indication information, and the first indication information indicates that the first network device has activated the second uplink resource.

2. The method according to claim 1, wherein before receiving the first message or the second message from the second network device, the method further comprises:
sending resource configuration information of the at least one candidate cell and second indication information to the second network device, wherein the second indication information indicates that the resource configuration information does not comprise the first uplink resource, or the second indication information indicates that the resource configuration information comprises the second uplink resource.

3. The method according to claim 1 or 2, wherein the first message is further used to request the first network device to provide synchronization configuration information of the at least one candidate cell, and the synchronization configuration information is used by the first network device to synchronize with the first terminal device.

4. The method according to any one of claims 1 to 3, wherein the information about the first uplink resource comprises one or more of the following information:
the first uplink resource;
third indication information, indicating that the first network device has provided the first uplink resource; and
fourth indication information, indicating that the first network device refuses to provide the first uplink resource.

5. The method according to any one of claims 1 to 4, wherein the third message further comprises the synchronization configuration information; and the synchronization configuration information is used by the first network device to synchronize with the first terminal device, the synchronization configuration information comprises a random access time-frequency resource, the random access time-frequency resource indicates a first time domain position and/or a first frequency domain position at which the first network device synchronizes with the first terminal device, and the first time domain position and/or the first frequency domain position are/is used by the second network device to stop scheduling data transmission for the first terminal device.

6. The method according to claim 1 or 2, wherein the second message comprises one or more of the following information:
identification information of the at least one candidate cell; and
fifth indication information, indicating the first network device to activate the second uplink resource at a second time domain position.

7. The method according to claim 1 or 6, wherein when there are one or more second uplink resources, the fourth message further comprises one or more of the following information:
sixth indication information, indicating that the first network device has activated one second uplink resource; and
seventh indication information, indicating that the first network device has activated any one of a plurality of second uplink resources.

8. A cell handover method, applied to a first network device, wherein the first network device provides at least one candidate cell for a first terminal device, and the method comprises:
synchronizing with the first terminal device; and
sending a fifth message to a second network device when the synchronization is completed, wherein the second network device provides a source cell for the first terminal device, the fifth message comprises a first uplink resource of the at least one candidate cell, and the first uplink resource is used by the first terminal device to access the at least one candidate cell.

9. The method according to claim 8, wherein sending the fifth message to the second network device when the synchronization is completed comprises:
sending the fifth message to the second network device when the first network device does not receive a sixth message from the first terminal device at a third time domain position, wherein a difference between the third time domain position and a fourth time domain position is greater than a first threshold, the fourth time domain position is a time domain position at which the first network device sends a seventh message to the first terminal device, the sixth message is a retransmitted message of a first message MSG1 in a random access process, and the seventh message is a second message MSG2 in the random access process; or
sending the fifth message to the second network device when the first network device receives an eighth message from the first terminal device, wherein the eighth message is a third message MSG3 in the random access process.

10. The method according to claim 9, wherein the eighth message comprises a cause value; and the cause value indicates the first terminal device to access the at least one candidate cell in the random access process, or the cause value indicates the first terminal device to complete the synchronization with the first network device in the random access process.

11. The method according to any one of claims 8 to 10, wherein the fifth message further comprises one or more of the following information:
identification information of the at least one candidate cell;
eighth indication information, indicating that the first network device has completed the synchronization with the first terminal device; and
ninth indication information, indicating that the first network device has provided the first uplink resource.

12. A cell handover method, applied to a first network device, wherein the first network device provides at least one candidate cell for a first terminal device, and the method comprises:
receiving a ninth message from the second network device, wherein the ninth message comprises tenth indication information, the tenth indication information indicates the first network device to send a first uplink resource of a target cell to the first terminal device at a fifth time domain position or a time domain position after the fifth time domain position, the target cell is any candidate cell in the at least one candidate cell, and the first uplink resource is used by the first terminal device to access the target cell; and
sending the first uplink resource to the first terminal device at the fifth time domain position or the time domain position after the fifth time domain position.

13. The method according to claim 12, wherein the ninth message further comprises one or more of the following information:
identification information of the target cell; and
eleventh indication information, indicating the first network device to send the first uplink resource to the first terminal device in a first beam direction, or indicating the first network device to receive an uplink message from the first terminal device in a second beam direction.

14. A cell handover method, applied to a second network device, wherein the second network device provides a source cell for a first terminal device, and the method comprises:
receiving a first measurement result from the first terminal device, wherein the first measurement result comprises measurement results corresponding to the source cell and at least one candidate cell of the first terminal device;
sending a first message or a second message to a first network device, wherein the first network device provides the at least one candidate cell for the first terminal device, the first message is used to request the first network device to provide a first uplink resource of the at least one candidate cell, the second message is used to request the first network device to activate a second uplink resource of the at least one candidate cell, and the first uplink resource and the second uplink resource are used by the first terminal device to access the at least one candidate cell; and
receiving a third message from the first network device based on the first message and sending a tenth message to the first terminal device, or receiving a fourth message from the first network device based on the second message, wherein the third message comprises information about the first uplink resource, the tenth message comprises the first uplink resource, the fourth message comprises first indication information, and the first indication information indicates that the first network device has activated the second uplink resource.

15. The method according to claim 14, wherein the method further comprises:
before receiving the first measurement result from the first terminal device, receiving resource configuration information of the at least one candidate cell and second indication information from the first network device, wherein the second indication information indicates that the resource configuration information does not comprise the first uplink resource, or the second indication information indicates that the resource configuration information comprises the second uplink resource; and
after receiving the first measurement result from the first terminal device, sending an eleventh message to the first terminal device, wherein the eleventh message comprises eleventh indication information, the eleventh indication information indicates the first terminal device to access a target cell, and the target cell is any candidate cell in the at least one candidate cell.

16. The method according to claim 15, wherein the eleventh message further comprises one or more of the following information:
identification information of the target cell;
twelfth indication information, indicating the first terminal device to access the target cell without random access;
thirteenth indication information, indicating the first terminal device to send an uplink message to the first network device on the first uplink resource or the second uplink resource of the target cell; and
fourteenth indication information, indicating that the second uplink resource of the target cell has been activated.

17. The method according to claim 15 or 16, wherein sending the first message or the second message to the first network device comprises:
if the second indication information indicates that the resource configuration information does not comprise the first uplink resource, sending the first message to the first network device before sending the eleventh message; or
if the second indication information indicates that the resource configuration information comprises the second uplink resource, sending the second message to the first network device before sending the eleventh message, after sending the eleventh message, or when sending the eleventh message.

18. The method according to claim 16 or 17, wherein the first message is further used to request the first network device to provide synchronization configuration information of the at least one candidate cell, and the synchronization configuration information is used by the first network device to synchronize with the first terminal device.

19. The method according to any one of claims 16 to 18, wherein the information about the first uplink resource comprises one or more of the following information:
the first uplink resource;
third indication information, indicating that the first network device has provided the first uplink resource; and
fourth indication information, indicating that the first network device refuses to provide the first uplink resource.

20. The method according to any one of claims 16 to 19, wherein the third message further comprises the synchronization configuration information, the synchronization configuration information is used by the first network device to synchronize with the first terminal device, and the synchronization configuration information comprises a random access time-frequency resource; and after receiving the third message from the first network device based on the first message, the method further comprises:
determining, based on the random access time-frequency resource, a first time domain position and/or a first frequency domain position at which the first network device synchronizes with the first terminal device; and
stopping, at the first time domain position and/or the first frequency domain position, scheduling data transmission for the first terminal device.

21. The method according to any one of claims 16 to 19, wherein the second message comprises one or more of the following information:
identification information of the at least one candidate cell; and
fifth indication information, indicating the first network device to activate the second uplink resource at a second time domain position.

22. The method according to any one of claims 16 to 21, wherein when there are one or more second uplink resources, the fourth message further comprises one or more of the following information:
sixth indication information, indicating that the first network device has activated one second uplink resource; and
seventh indication information, indicating that the first network device has activated any one of a plurality of second uplink resources.

23. A cell handover method, applied to a second network device, wherein the second network device provides a source cell for a first terminal device, and the method comprises:
receiving a first measurement result from the first terminal device, wherein the first measurement result comprises measurement results corresponding to the source cell and at least one candidate cell of the first terminal device;
receiving a fifth message from a first network device, wherein the first network device provides the at least one candidate cell for the first terminal device, the first network device has completed synchronization with the first terminal device, the fifth message comprises a first uplink resource of the at least one candidate cell, and the first uplink resource is used by the first terminal device to access the at least one candidate cell; and
sending a twelfth message to the first terminal device, wherein the twelfth message comprises the first uplink resource.

24. The method according to claim 23, wherein the fifth message further comprises one or more of the following information:
identification information of the at least one candidate cell;
eighth indication information, indicating that the first network device has completed the synchronization with the first terminal device; and
ninth indication information, indicating that the first network device has provided the first uplink resource.

25. A cell handover method, applied to a second network device, wherein the second network device provides a source cell for a first terminal device, and the method comprises:
receiving a first measurement result from the first terminal device, wherein the first measurement result comprises measurement results corresponding to the source cell and at least one candidate cell of the first terminal device; and
sending a ninth message to a first network device, wherein the first network device provides the at least one candidate cell for the first terminal device, the ninth message comprises tenth indication information, the tenth indication information indicates the first network device to send a first uplink resource of a target cell to the first terminal device at a fifth time domain position or a time domain position after the fifth time domain position, the target cell is any one candidate cell in the at least one candidate cell, and the first uplink resource is used by the first terminal device to access the target cell.

26. The method according to claim 25, wherein the ninth message further comprises one or more of the following information:
identification information of the target cell; and
eleventh indication information, indicating the first network device to send the first uplink resource to the first terminal device in a first beam direction, or indicating the first network device to receive an uplink message from the first terminal device in a second beam direction.

27. The method according to claim 25 or 26, wherein the method further comprises:
sending a thirteenth message to the first terminal device, wherein the thirteenth message indicates the first terminal device to access the target cell at the fifth time domain position or the time domain position after the fifth time domain position.

28. A communication apparatus, comprising a module configured to perform the method according to any one of claims 1 to 7, or a module configured to perform the method according to any one of claims 8 to 11, or a module configured to perform the method according to claim 12 or 13, or a module configured to perform the method according to any one of claims 14 to 22, or a module configured to perform the method according to claim 23 or 24, or a module configured to perform the method according to any one of claims 25 to 27.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, through a logic circuit or by executing code instructions, the method according to any one of claims 1 to 7, or the method according to any one of claims 8 to 11, or the method according to claim 12 or 13, or the method according to any one of claims 14 to 22, or the method according to claim 23 or 24, or the method according to any one of claims 25 to 27.

30. A computer-readable storage medium, comprising a program or instructions, wherein when the program or the instructions are run on a computer, the method according to any one of claims 1 to 7, or the method according to any one of claims 8 to 11, or the method according to claim 12 or 13, or the method according to any one of claims 14 to 22, or the method according to claim 23 or 24, or the method according to any one of claims 25 to 27 is performed.
